# EUROPEAN PATENT APPLICATION

(11) **EP 3 978 196 A1**
(43) Date of publication of application: **06.04.2022**
(21) Application number: 20812592.2
(22) Date of filing: 15.05.2020
(51) Int. Cl.: B25F 5/00, H01M 10/42, H01M 2/10

(54) **BATTERY PACK AND ELECTRIC DEVICE**

(30) Priority: 30.05.2019 JP 2019101595
(71) Applicant: Koki Holdings Co., Ltd., Tokyo 108-6020 (JP)
(72) Inventor: MASUMORI Toshiaki, Hitachinaka-City Ibaraki 3128502 (JP); YAMAGUCHI Satoshi, Hitachinaka-City Ibaraki 3128502 (JP); HANAWA Hiroyuki, Hitachinaka-City Ibaraki 3128502 (JP)
(74) Representative: Parker, Andrew James
(86) International application number: PCT/JP2020/019541
(87) International publication number: WO 2020/241329

(57) **Abstract**

The present invention improves the dust resistance and the water resistance of a wireless communication device that is mounted on a circuit board of a battery pack. A battery pack that comprises: a connection terminal group comprising a positive electrode terminal and a negative electrode terminal, which are connected to a battery cell; a wireless communication unit for performing a wireless communication with an external device; a wireless control circuit for controlling the wireless communication unit; and a circuit board on which the wireless communication unit is mounted. The wireless communication unit comprises an antenna wire that is extended along the surface of the circuit board; a rubber sheet member is provided so as to cover the upper surface of the wireless communication unit; and a resin layer is formed so as to cover a soldered portion of an electronic element that is mounted in a region of the circuit board other than the rubber sheet member. The rubber sheet member is provided with a cut so as to expose the antenna wire portion to the outside.

## Description

### [Technical Field]

The present invention relates to a battery pack having a wireless communication function.

### [Background Art]

Patent Literature 1 discloses that information on usage history of an electric device is transmitted to an external device via an adapter having a communication unit to enhance convenience of the electric device.

### [Citation List]

### [Patent Literature]

### [Patent Literature 1]

Japanese Patent Application Laid-Open No. 2019-25611

### [Summary of Invention]

### [Technical Problem]

The inventors wanted information managed by a microcontroller of a battery pack to be read out to the outside to perform more advanced management. Therefore, mounting a wireless communication mechanism in a battery pack was considered. The wireless communication mechanism can be realized by mounting a module in which an antenna and a microcontroller are incorporated in one chip. Normally, a resin is applied on mounted elements on a circuit board in a battery pack for waterproofing and dustproofing purposes. However, applying something onto an antenna for waterproofing and dustproofing purposes can cause a likelihood of it becoming a shield and should be avoided as far as possible. On the other hand, in mass production, there is a concern that demanding detailed restrictions on application of a resin can be a factor that greatly reduces a production efficiency, and at the same time may increase a rate of defects and increase individual differences in the performance of finished products.

The present invention has been made in view of the above-described background, and an objective of the present invention is to provide a battery pack in which a wireless communication unit is mounted at an optimum position. Another objective of the present invention is to provide a battery pack that can effectively achieve dustproofing and waterproofing of a wireless communication unit. Still another objective of the present invention is to provide a battery pack in which an assembly efficiency of a substrate on which a wireless communication unit is mounted is improved.

### [Solution to Problem]

Typical features of the invention disclosed in the present application will be described as follows. According to one feature of the present invention, a battery pack includes a case which accommodates a plurality of battery cells, a positive electrode terminal and a negative electrode terminal connected to the battery cells, a wireless communication unit which performs wireless communication with an external device, a wireless control circuit which controls the wireless communication unit, and a circuit board on which the wireless communication unit is mounted, in which the wireless communication unit includes a wireless communication circuit and an antenna wire extending along a surface of the circuit board from the wireless communication circuit, and a sealing member is provided around the wireless communication unit in a surface direction. Then, a resin layer covering a soldered portion of mounted electronic elements is formed in a region of the circuit board other than the sealing member. The sealing member includes a frame part covering a periphery of the wireless communication unit in the surface direction and a lid part covering the frame part and accommodates the wireless communication circuit and the antenna wire inside the sealing member by positioning an opening surface of the frame part to be in contact with the circuit board. Further, a sealing member having a higher transmittance to radio waves in a used frequency band than the resin layer may be selected as the sealing member.

According to another feature of the present invention, a battery pack includes a case which accommodates a plurality of battery cells, a positive electrode terminal and a negative electrode terminal connected to the battery cells, a wireless communication unit which performs wireless communication with an external device, a wireless control circuit which controls the wireless communication unit, and a circuit board on which the wireless communication unit is mounted, in which the wireless communication unit includes a wireless communication circuit and an antenna wire extending along a surface of the circuit board from the wireless communication circuit, a rubber sheet member covering an upper surface of the wireless communication unit is provided, and a resin layer covering a soldered portion of mounted electronic elements is formed in a region of the circuit board other than the rubber sheet member. The rubber sheet member includes a notch formed to expose a portion of the antenna wire to the outside. Also, the resin layer is formed in an outer edge portion of the rubber sheet member at a part of an outer surface of a rubber sheet on a side opposite to the circuit board.

According to still another feature of the present invention, a plurality of connection terminal groups including a positive electrode terminal and a negative electrode terminal is disposed to be aligned in a left-right direction on the circuit board, and the wireless communication unit is mounted on a front side of the circuit board in a mounting direction with the connection terminal groups as a reference. Also, the resin layer is formed by applying silicone, and the connection terminal groups except for leg parts are exposed from the resin layer to the outside. Further, the wireless communication unit is configured to include the wireless communication circuit incorporated in a microcontroller and an antenna unit connected to the microcontroller, and the antenna unit is disposed on a front side of the microcontroller when viewed in the mounting direction.

### [Advantageous Effects of Invention]

According to the present invention, since the wireless communication device and the antenna were mounted at a specific position on the circuit board of the battery pack, a disposition avoiding the vicinity of the metal terminals and the back of the board as far as possible could be realized, and deterioration in antenna efficiency from characteristics of radio waves could be suppressed. Also, it is possible to achieve waterproofing and dustproofing by forming the resin layer while avoiding the antenna portion. Further, although the assembly process for mounting the sealing member in the vicinity of the antenna or stretching the rubber sheet member increases, workability is better than that in application work under the above detailed restrictions, human error can be reduced, and this thereby leads to an improved accuracy in production.

### [Brief Description of Drawings]

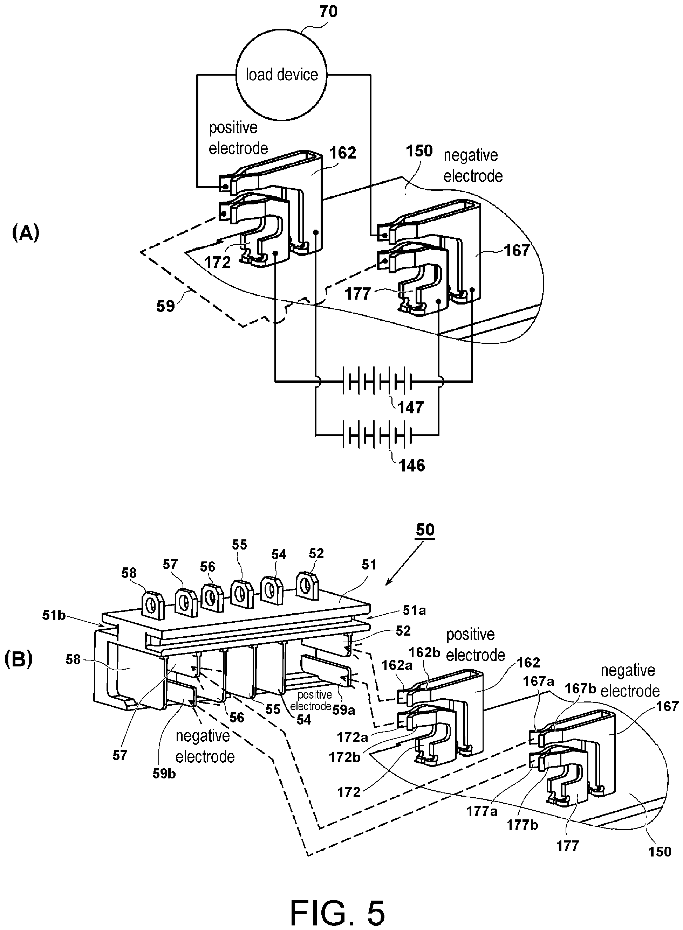

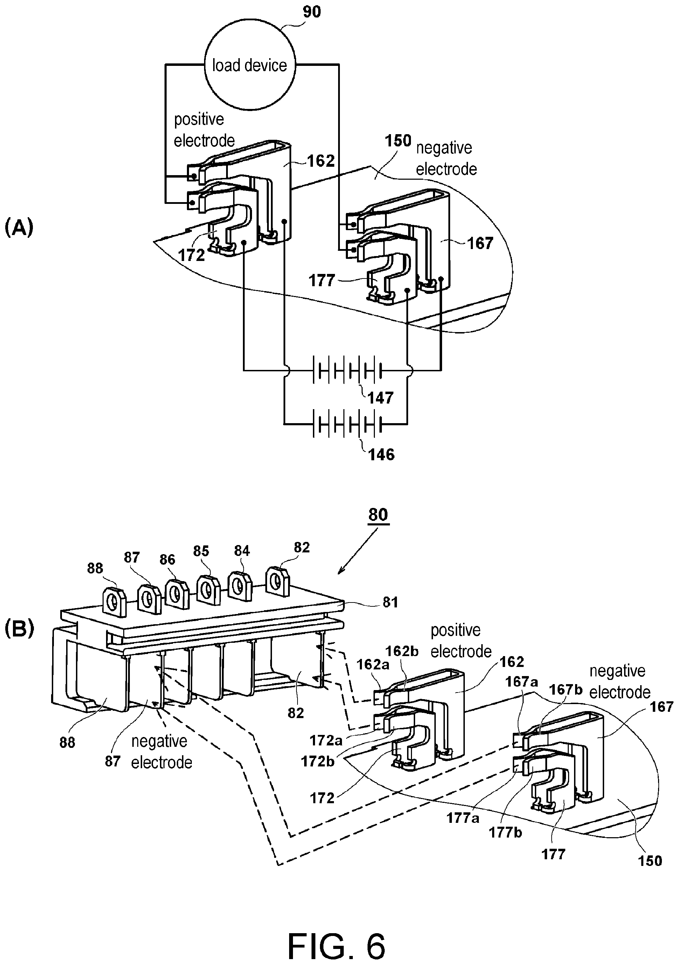

Fig. 1 is an overall schematic view of a management system using a battery pack 100 according to an example of the present invention.
Fig. 2 is a perspective view of the battery pack 100 according to the example of the present invention.
Fig. 3 is a perspective view of a power tool main body 1 to which the battery pack 100 according to the present invention is to be mounted.
Fig. 4 is an exploded perspective view of the battery pack 100 of Fig. 3.
   (A) of Fig. 5 is a partial perspective view illustrating shapes of positive electrode terminals (162 and 172) and negative electrode terminals (167 and 177) of the battery pack 100 and a view illustrating a connection circuit at the time of high voltage output, and (B) of Fig. 5 is a partial perspective view illustrating a connection status between a terminal part 50 of a high voltage electric device and terminals on the battery pack 100 side.
   (A) of Fig. 6 is a partial perspective view illustrating shapes of the positive electrode terminals (162 and 172) and the negative electrode terminals (167 and 177) of the battery pack 100 and a view illustrating a connection circuit at the time of low voltage output, and (B) of Fig. 6 is a partial perspective view illustrating a connection status between a terminal part 80 of a low voltage electric device and terminals on the battery pack 100 side.

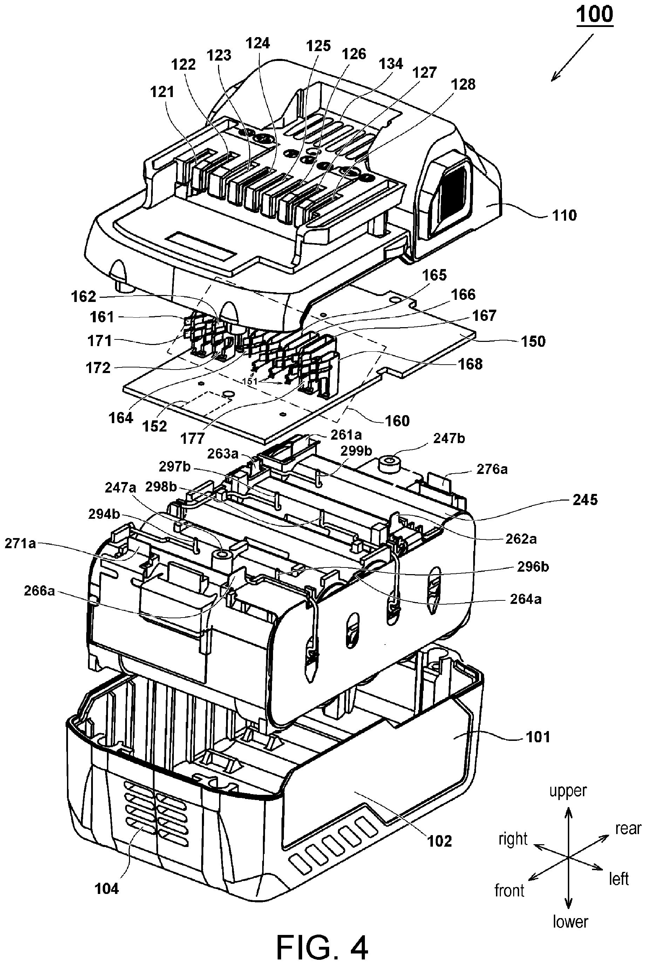

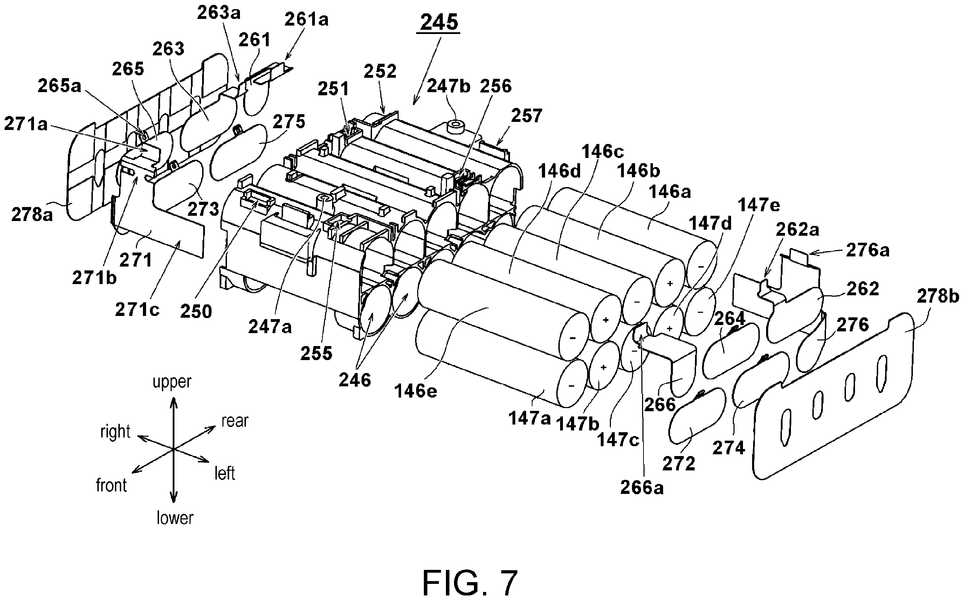

Fig. 7 is an exploded perspective view for explaining a status of stacking and a method of wiring battery cells using a separator 245 of Fig. 4.

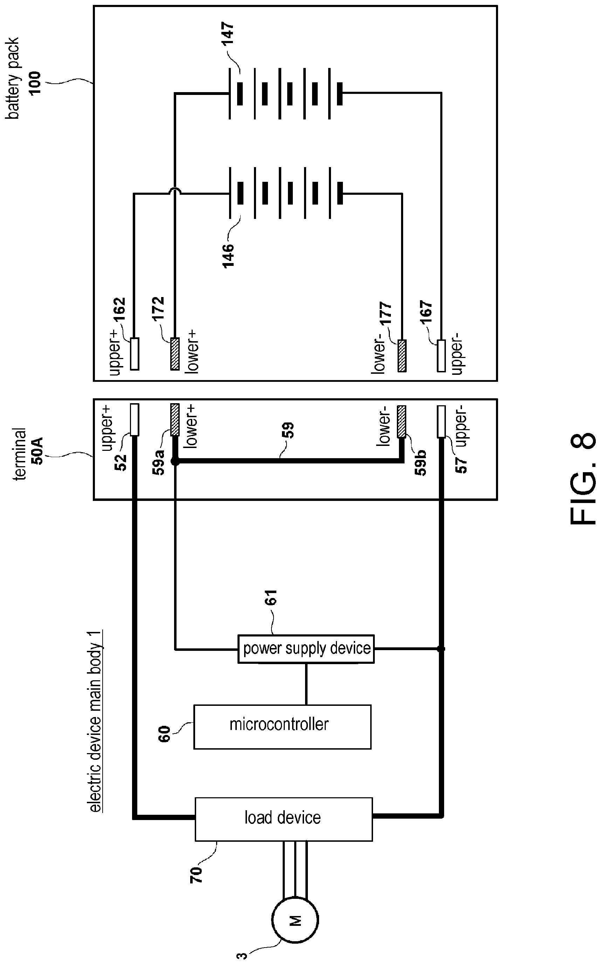

Fig. 8 is a block diagram showing a basic internal circuit of the battery pack 100.

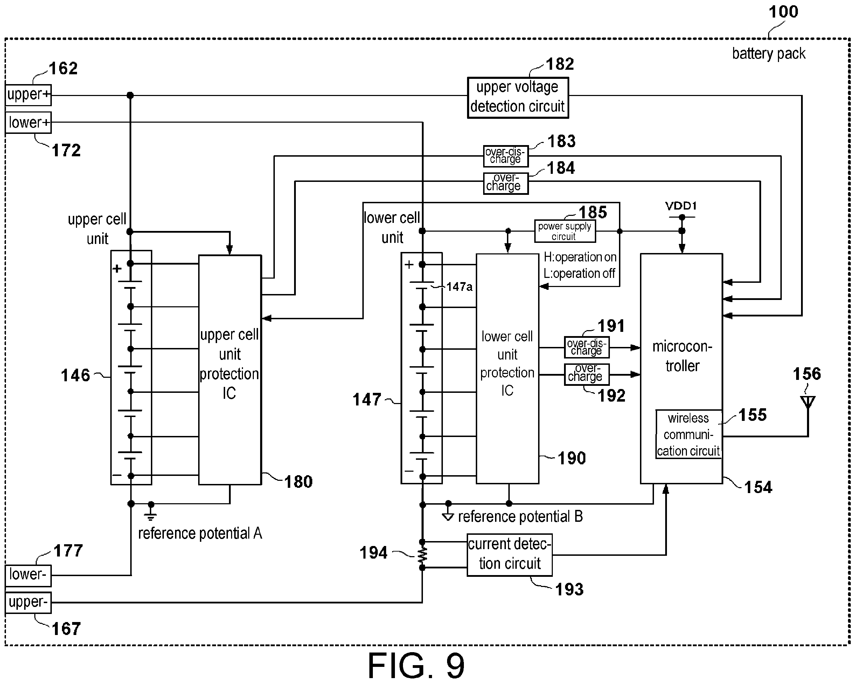

Fig. 9 is a circuit diagram of an electric device for high voltage to which the battery pack 100 of an automatic voltage switching type is connected.

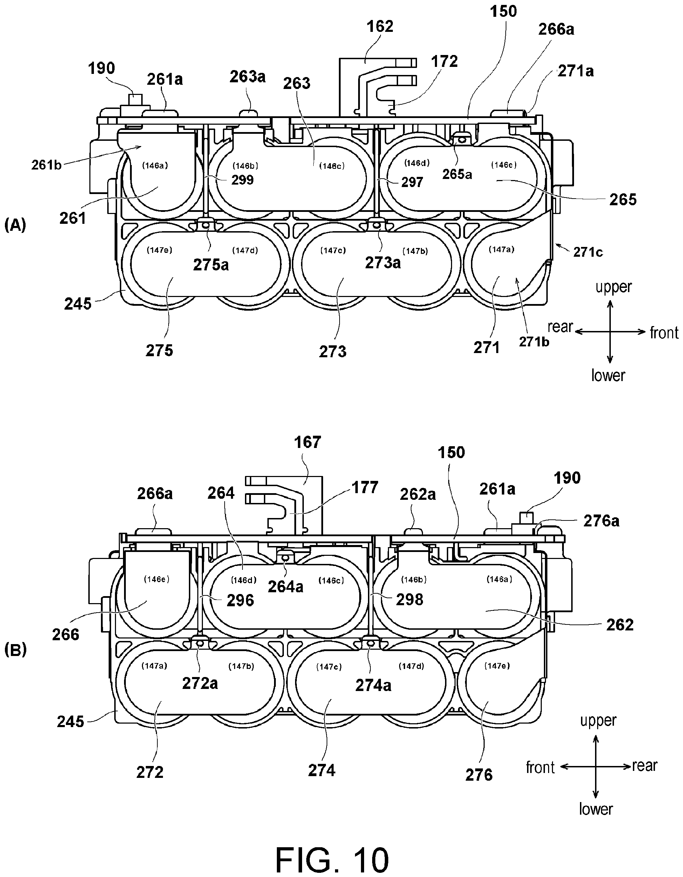

Fig. 10 is a side view of the separator 245 after the parts illustrated in Fig. 5 are assembled, in which (A) of Fig. 10 is a right side and (B) of Fig. 10 is a left side view.

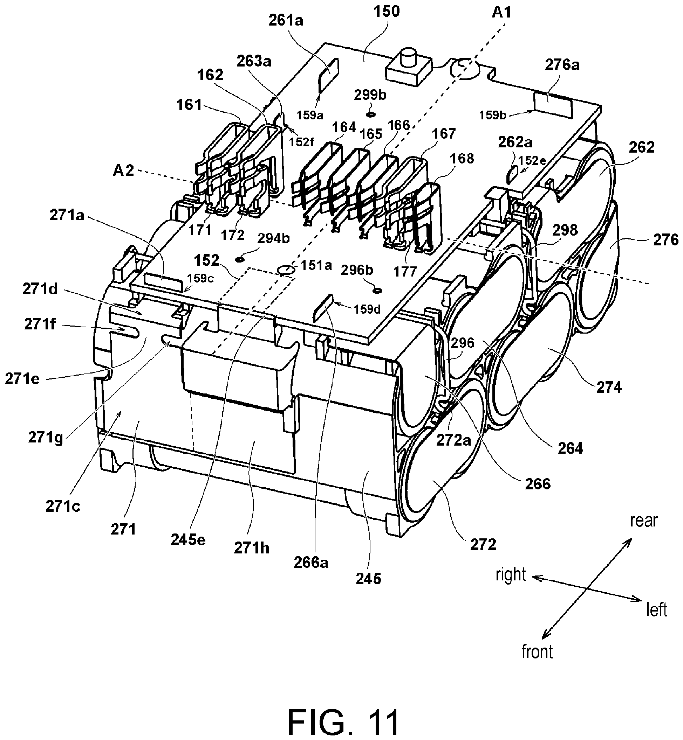

Fig. 11 is a perspective view illustrating a state in which a circuit board 150 is fixed to the separator 245 (perspective view seen from the above left front).

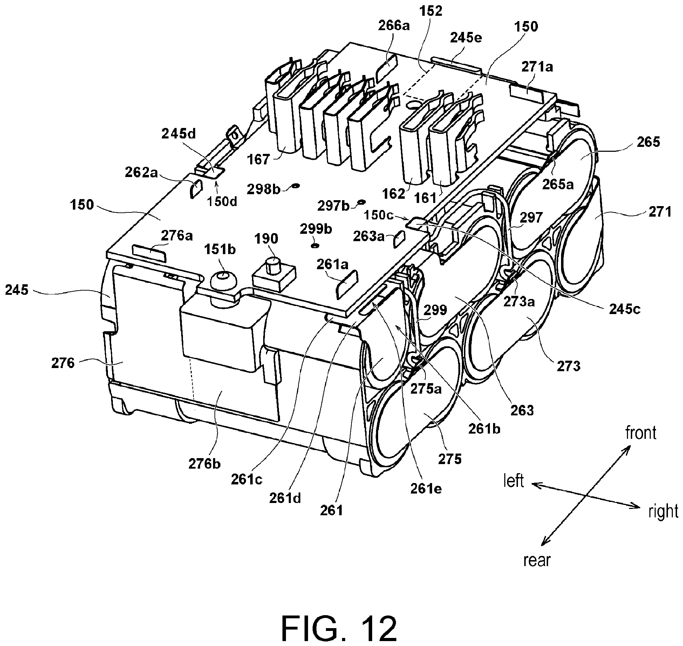

Fig. 12 is a perspective view illustrating a state in which the circuit board 150 is fixed to the separator 245 (perspective view seen from the above right rear).

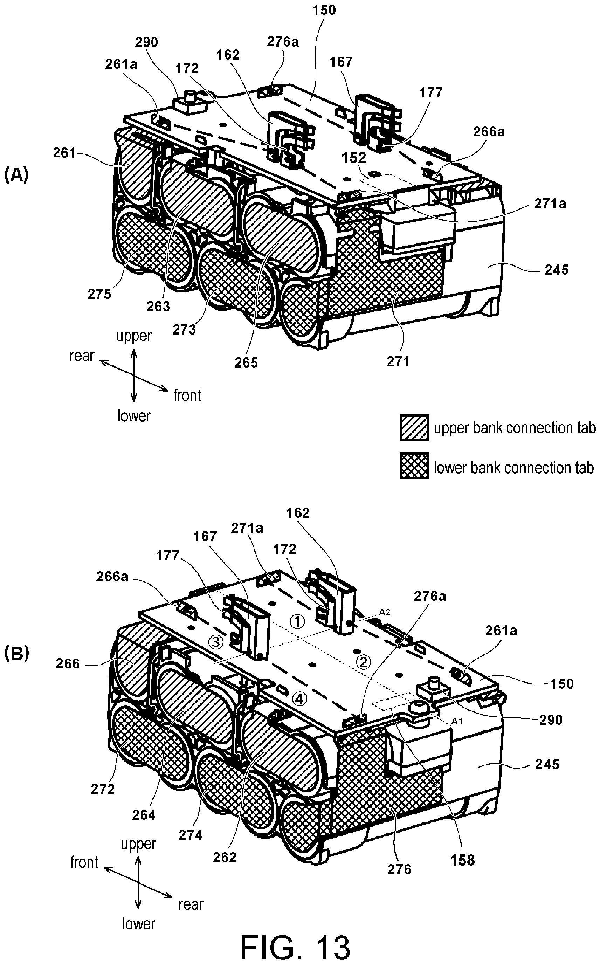

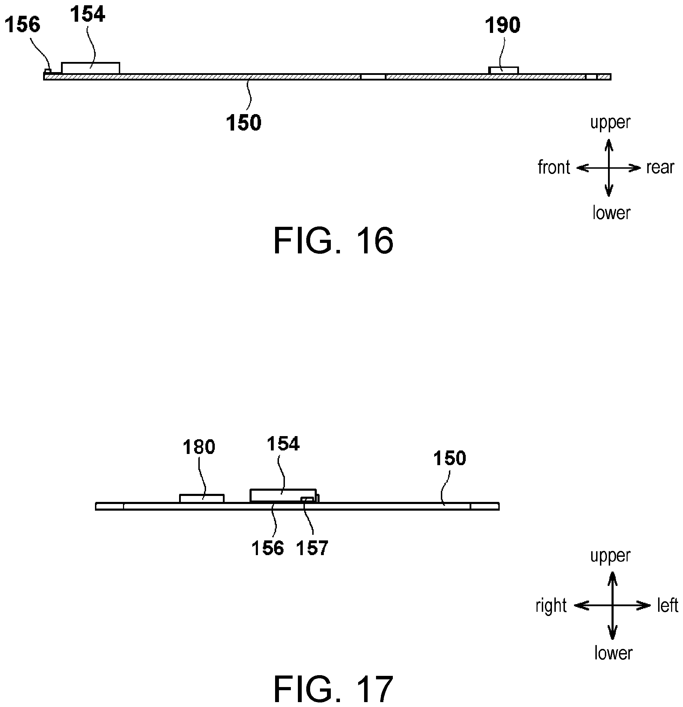

Fig. 13 Fig. 16 is a view for explaining a method of connecting lead-out plates 261, 266, 271, and 276 to the positive electrode terminals (162 and 172) and the negative electrode terminals (167 and 177) in the battery pack 100.

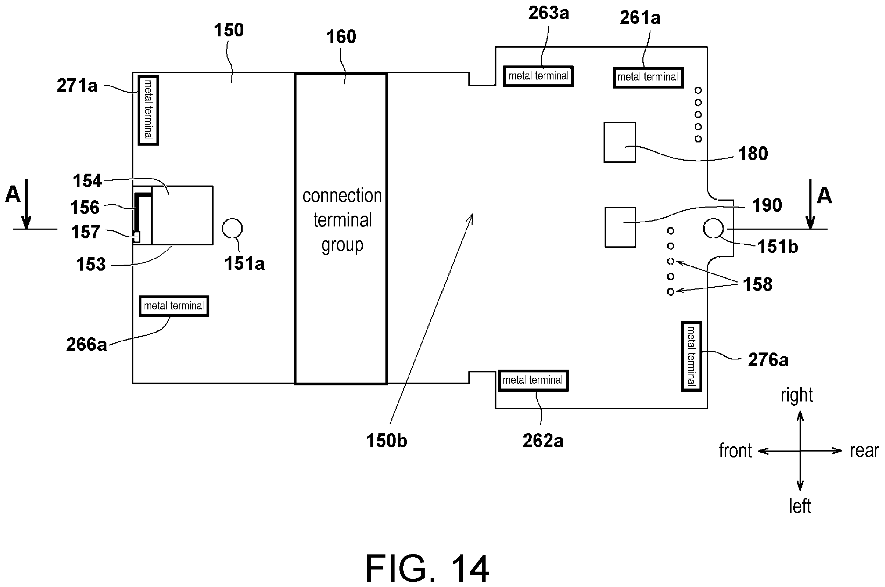

Fig. 14 is a top view of the circuit board 150 of the battery pack 100 according to the present invention.

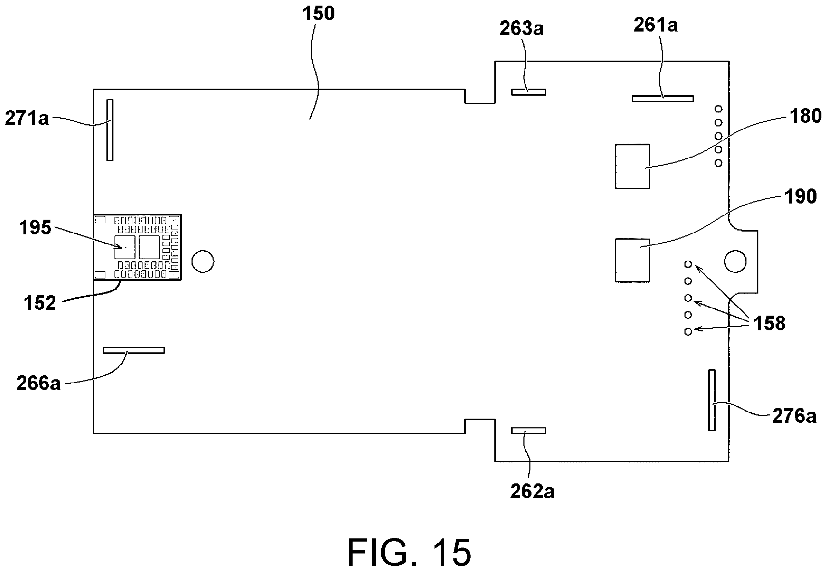

Fig. 15 is a top view illustrating a state in which a module of wireless communication is removed in the circuit board 150 of Fig. 14.
Fig. 16 is a cross-sectional view along line A-A of the circuit board 150 of the battery pack 100 of Fig. 14.
Fig. 17 is a front view of the circuit board 150 of the battery pack 100 of Fig. 14.

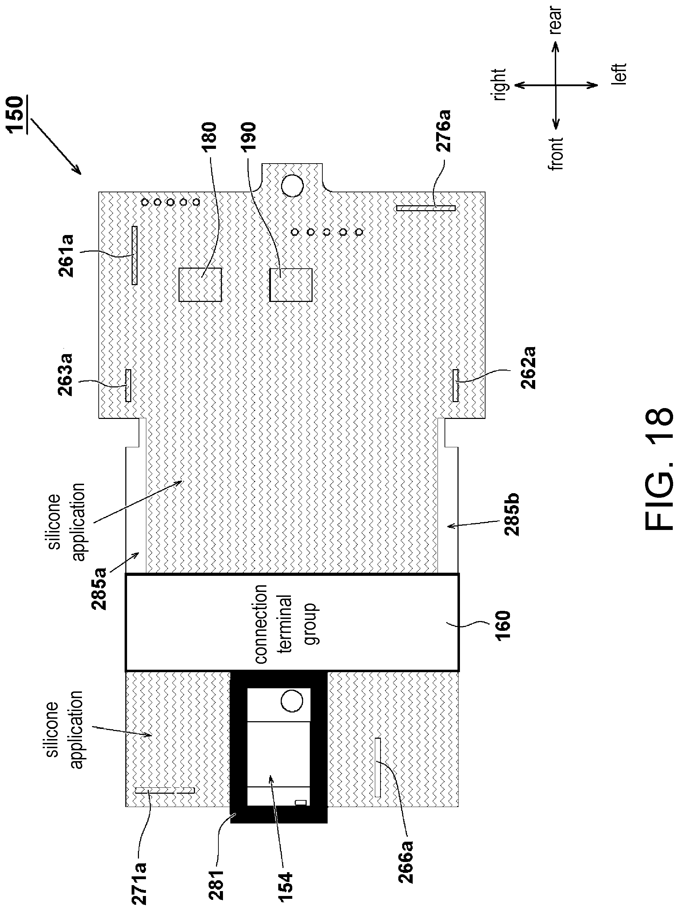

Fig. 18 is a view illustrating a status of silicone application on the circuit board 150 of the battery pack 100 according to the present invention.

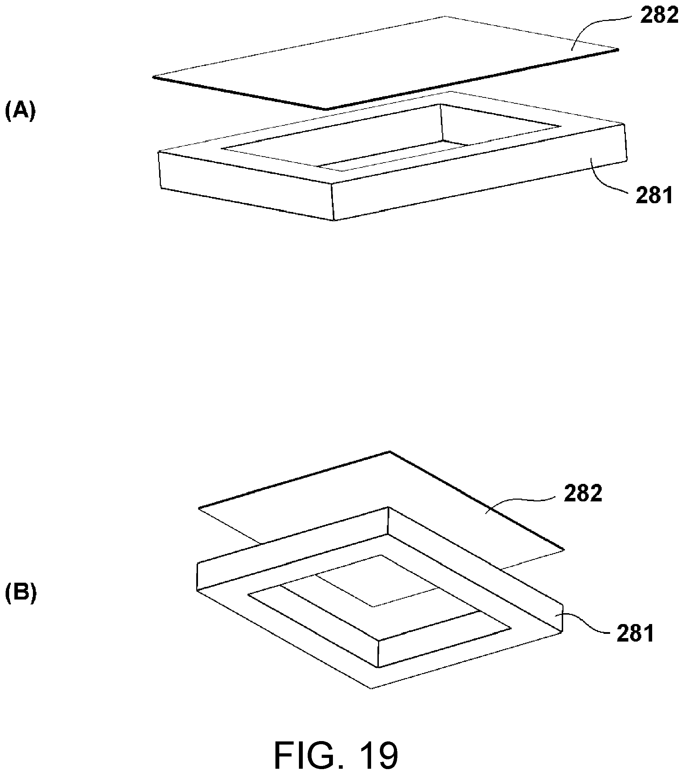

Fig. 19 is a perspective view of a frame body 281 of Fig. 18.

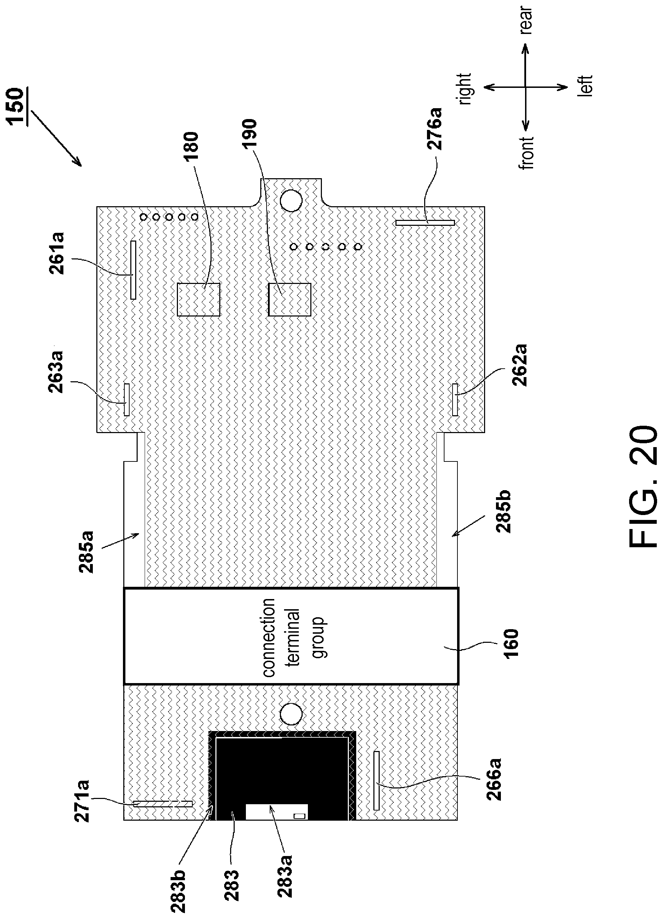

Fig. 20 is a view illustrating a status of silicone application on the circuit board 150 by a method different from that of Fig. 18.

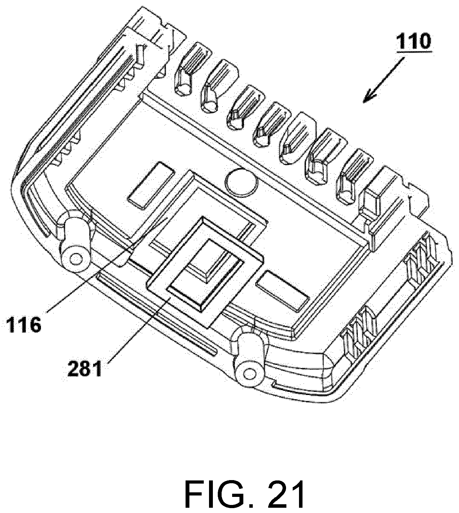

Fig. 21 is a partial enlarged view illustrating a configuration in which the frame body 281 is covered with an upper case 110.

### [Description of Embodiments]

### Example 1

Hereinafter, examples of the present invention will be described on the basis of the drawings. In the following figures, the same portions will be denoted by the same reference signs, and repeated description will be omitted. In the present specification, description will be made using a power tool operated by a battery pack as an example of an electric device.

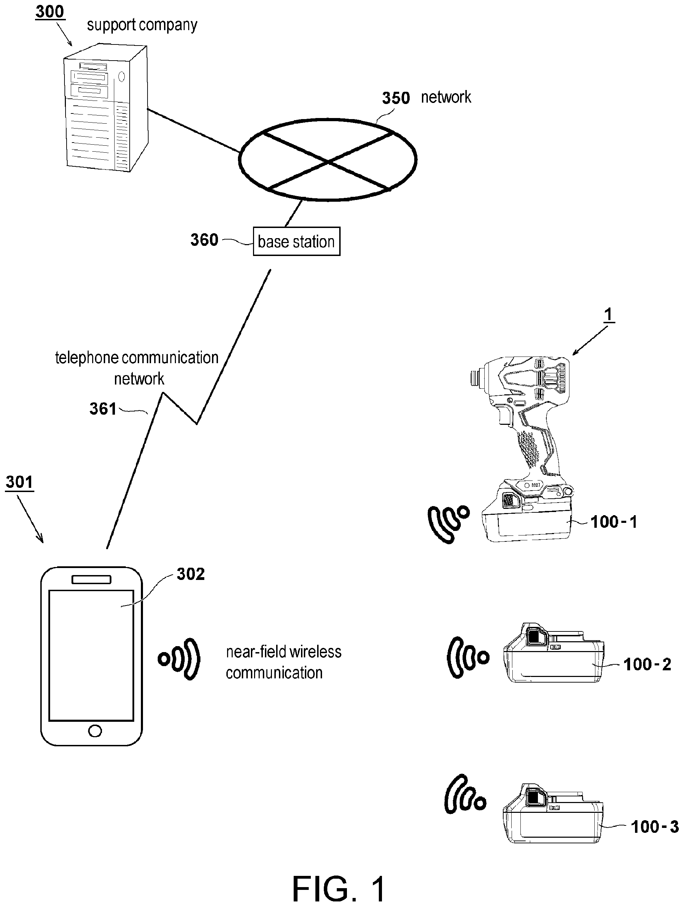

Fig. 1 is an overall schematic view of a management system using a battery pack 100 according to an example of the present invention. A power tool main body 1 is a portable electric device that can use a battery pack 100-1 as a power supply and is an impact tool that is widely used conventionally. The battery pack 100 of the present example includes a microcontroller mounted therein and Bluetooth (Bluetooth: Bluetooth SIG, Inc. USA registered trademark) that enables near-field wireless communication with the microcontroller. Since the wireless communication device is mounted inside the battery pack 100 in this way, wireless communication of the battery packs 100-1 to 100-3 with a terminal device 301, which is an external device, is possible bidirectionally. The terminal device 301 not only can communicate with the battery pack 100-1 in a state of being mounted in the power tool main body 1 but also can communicate with the battery packs 100-2 and 100-3 in a state of being removed from electric devices such as the power tool main body 1.

The battery packs 100-1 to 100-n are those in which a plurality of lithium-ion battery cells each having a rated voltage of 3.6 V is connected in series so that a DC current of, for example, 18 V or 36 V can be selectively output. Some models of the power tool (not illustrated) on a side to which the battery pack 100 is mounted include Bluetooth (registered trademark). In that case, there are also cases in which the terminal device 301 can indirectly acquire information of the battery pack 100 when the terminal device 301 is connected to the power tool. However, in the present example, the battery pack 100 and the terminal device 301 directly communicate with each other, and thereby the terminal device 301 can read information of the battery pack 100 regardless of whether the battery pack 100 is mounted on a power tool or the battery pack 100 is removed from a power tool.

The battery packs 100-1 to 100-3 are battery packs of the same model and the same capacity but are not limited to the same battery pack 100 and may be battery packs having various voltages and capacities of different types. However, it is important that each battery pack 100 includes a processor for managing batteries and a wireless communication device therein. As the terminal device 301, for example, a smartphone sold by a telephone company can be used. The terminal device 301 can be connected to a base station 360 of a telephone company using a telephone communication network 361 and can be connected to a server device of a manufacturer of the battery pack 100 or a support company 300 using a network 350 such as the Internet. Therefore, the terminal device 301 can transmit information received from the battery packs 100-1 to 100-3 to the server device of the support company 300 and can receive some information from the terminal device 301 and display it on a display screen 302. Further, the terminal device 301 can perform wireless communication with a specific battery pack (for example, 100-2) using a wireless communication device and write information to the microcontroller of the battery pack 100-2.

The battery pack 100 (for example, 100-1) performs a pairing with the terminal device 301. "Pairing" is an operation of associating and registering the terminal device 301 and the battery pack 100 side using wireless communication, and when a registration operation (pairing) of these is performed, the terminal device 301 can acquire necessary information from the paired battery pack 100. A relationship between the pairing partners may be "terminal device:number of battery packs =1:1 but may also be 1:n (n is a natural number) as illustrated in the figure. The number n which can be paired depends on a wireless communication standard used. Also, all of the owned battery packs that can be wirelessly connected may be paired at the same time, but all of them need not necessarily be paired at the same time, and only the target battery pack 100 for which a status thereof is desired to be checked may be selected and paired.

The terminal device 301 processes information received from the battery pack 100 by wireless communication and acquires a state of the battery pack 100, particularly usage states of various types such as the number of times of charging, the number of times of overcharging, the number of times of over-discharge, types of power tool to which it has been mounted, and voltage recording at the time of use to ascertain a present state of the battery pack 100. Data of the ascertained information is transmitted to the support company 300 via the telephone communication network 361 and the network 350. In order to enable wireless communication with the battery pack 100, dedicated software, so-called application software, is installed in the terminal device 301. Further, the terminal device 301 is not limited to a so-called smartphone and may be a tablet type personal computer (PC), a general-purpose PC, or the like as long as bidirectional or unidirectional wireless communication with the wireless communication device on the battery pack 100 side is possible.

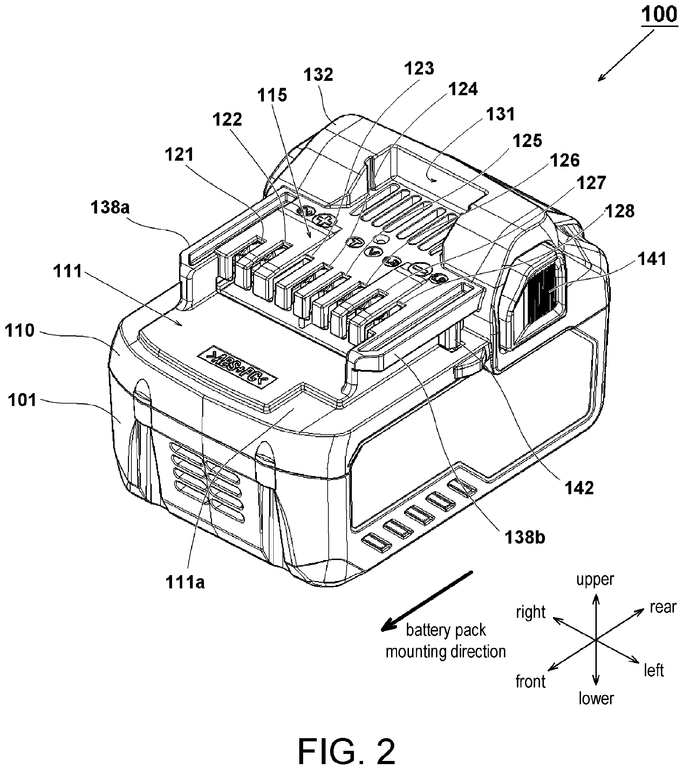

Fig. 2 is a perspective view of the battery pack 100 according to the example of the present invention. The battery pack 100 is a "voltage variable battery pack" in which two sets of cell units each having five 3.6 V lithium-ion battery cells connected in series are accommodated, and the two of 18 V output (low voltage output) and 36 V output (high voltage output) can be switched between by changing a connection method of the two sets of cell units.

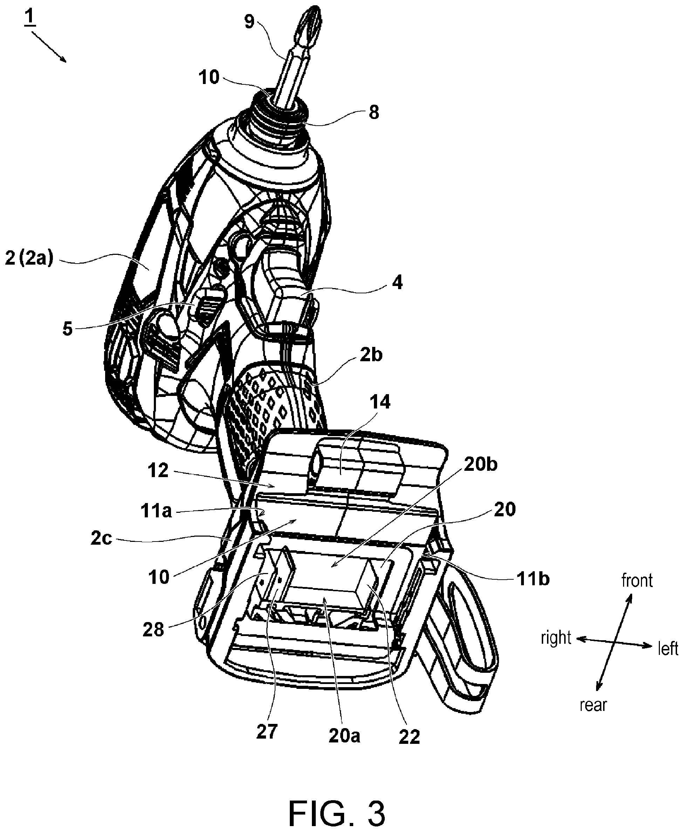

A housing of the battery pack 100 is formed by a lower case 101 and an upper case 110 that can be separated from each other in a vertical direction. The upper case 110 includes a mounting mechanism in which two rails 138a and 138b are formed for mounting to a battery pack mounting part 2c (to be described later in Fig. 3) of the power tool main body 1. The rails 138a and 138b are formed to extend in a direction parallel to a direction in which the battery pack 100 is mounted and to protrude to left and right side surfaces of the upper case 110. The rails 138a and 138b are formed in a shape corresponding to rail grooves (not illustrated) formed in the battery pack mounting part 2c of the power tool main body 1, and the battery pack 100 is fixed to the power tool main body 1 by locking the rails 138a and 138b with locking parts 142 which are claws of the latches 141 in a state in which the rails 138a and 138b are fitted with the rail grooves on the electric device main body side. At the time of removing the battery pack 100 from the power tool main body 1, when the latches 141 on both the left and right sides are pushed, the locking parts 142 move inward to release the locked state, and thereby the battery pack 100 in that state is moved to a side opposite to the mounting direction.

A lower stage surface 111 and an upper stage surface 115 of the upper case 110 are formed to have different heights in a stepwise manner, and a plurality of slots 121 to 128 extending rearward from a connecting portion thereof is formed. The slots 121 to 128 are portions cut out to have a predetermined length in a direction in which the battery pack is mounted, and a plurality of connection terminals (connection terminal groups) that can be fitted with device-side terminals of the power tool main body 1 or an external charging device (not illustrated) is disposed inside the cut-out portions. In the slots 121 to 128, the slot 121 on a side close to the rail 138a on a right side of the battery pack 100 serves as an insertion port for a positive electrode terminal (C+ terminal) for charging, and the slot 122 serves as an insertion port for a positive electrode terminal (+ terminal) for discharging. Also, the slot 127 on a side close to the rail 138b on the left side serves as an insertion port for a negative electrode terminal (- terminal). A plurality of signal terminals for transmitting signals to the battery pack 100, the power tool main body 1, and an external charging device (not illustrated) is disposed between the positive electrode terminals and the negative electrode terminal, and here, four slots 123 to 126 for the signal terminals are provided between the power terminal groups. The slot 123 is a spare terminal insertion port, and no terminal is provided therefor in the present example. The slot 124 is an insertion port for a T terminal from which a signal serving as identification information of the battery pack 100 is output to the power tool main body or a charging device. The slot 125 is an insertion port for a V terminal to which a control signal from an external charging device (not illustrated) is input. The slot 126 is an insertion port for an LS terminal for outputting battery temperature information by a thermistor (temperature sensing element) (not illustrated) provided in contact with the cell. The slot 128 for an LD terminal which outputs an abnormal stop signal by a battery protection circuit (not illustrated) included in the battery pack 100 is also provided on a left side of the slot 127 serving as the insertion port of the negative electrode terminal (- terminal).

A raised part 132 formed to be raised is formed on a rear side of the upper stage surface 115. A stopper part 131 having a recessed shape is formed near a center of the raised part 132. The stopper part 131 serves as an abutment surface when the battery pack 100 is mounted on the battery pack mounting part 2c (described later with Fig. 3). When the battery pack 100 is mounted at a predetermined position on the power tool main body 1, the plurality of terminals (device side terminals) disposed in the power tool main body 1 and the plurality of connection terminals disposed in the battery pack 100 are brought into contact with each other to be in a conductive state. A notch part 111a for discrimination that is configured to prevent a conventional 18 V battery pack from being mounted on a 36 V power tool main body is formed at a front left corner portion of the lower stage surface 111.

Fig. 3 is a perspective view of the power tool main body 1 to which the battery pack 100 according to the present invention is to be mounted. The power tool main body 1 illustrated here is an impact driver and includes a handle part 2b provided to extend downward from a body portion of a housing 2 and a battery pack mounting part 10 formed on a lower side of the handle part 2b. A trigger switch 4 is provided on the handle part 2b. An anvil (not illustrated) serving as an output shaft is provided on a front side of the housing 2, and a distal end tool holding part 8 to which a distal end tool 9 is mounted is provided at a distal end of the anvil. Here, a plus driver bit is mounted as the distal end tool 9. There is no limitation to electric tools, and general electric devices using a battery pack may be configured to include the battery pack mounting part 10 formed to correspond to a shape of a battery pack to be mounted so that a battery pack that does not fit the battery pack mounting part 10 cannot be mounted. The battery pack mounting part 10 includes rail grooves 11a and 11b formed to extend parallel to each other in a front-rear direction on inner wall portions on both left and right sides, and a terminal part 20 is provided therebetween. The terminal part 20 is manufactured by integrally molding a non-conductive material such as a synthetic resin, and a plurality of terminals made of a metal, for example, a positive electrode input terminal 22, a negative electrode input terminal 27, and an LD terminal (abnormal signal terminal) 28 are cast therein. The terminal part 20 is formed with a vertical surface 20a which is an abutment surface in a mounting direction (front-rear direction) and a horizontal surface 20b, and the horizontal surface 20b is a surface adjacent to and facing the upper stage surface 115 (see Fig. 2) when the battery pack 100 is mounted. A curved part 12 that comes into contact with the raised part 132 (see Fig. 2) of the battery pack 100 is formed on a front side of the horizontal surface 20b, and a protruding part 14 is formed near a left-right center of the curved part 12. The protruding part 14 serves as a boss for screwing the housing of the power tool main body 1 formed in two parts in a left-right direction and also serves the role of a stopper that restricts relative movement of the battery pack 100 in the mounting direction.

Fig. 4 is an exploded perspective view of the battery pack 100 of Fig. 3. The housing of the battery pack 100 is formed by the upper case 110 and the lower case 101 that can be separated in a vertical direction, and 10 battery cells are accommodated in an internal space of the lower case 101. A plurality of battery cells (not illustrated) is fixed by a separator 245 formed of a non-conductor such as a synthetic resin in a state in which five battery cells are each stacked in two stages. The separator 245 holds the plurality of battery cells so that only both left and right sides serving as both end portions of the battery cells are open.

A circuit board 150 is fixed on an upper side of the separator 245. The circuit board 150 fixes a plurality of connection terminals (161, 162, 164 to 168, 171, 172, and 177) by soldering and electrically connects these connection terminals to a circuit pattern (not illustrated). Various electronic elements (not illustrated here) such as a battery protection IC, a PTC thermistor, a resistor, a capacitor, a fuse, and a light emitting diode are also mounted on the circuit board 150. Further, a communication module and an antenna (both to be described later) forming a wireless communication device are mounted in an area occupied by a dotted line 152. A material of the circuit board 150 is one called a printed circuit board in which a pattern wiring is printed with a conductor such as a copper foil on a substrate that has been impregnated with a resin having insulating properties against the material, and a single-layer substrate, a double-sided substrate, or a multi-layer substrate can be used therefor. In the present example, a wiring pattern is formed on an upper surface (a surface which is an upper surface that can be seen from Fig. 4) and a lower surface (back surface) of the circuit board 150 using a double-sided substrate. A connection terminal group 160 is provided slightly in front of a center of the circuit board 150 in a front-rear direction, and a plurality of connection terminals (161, 162, 164 to 168, 171, 172, and 177) is fixed to be aligned therein in a transverse direction.

The positive electrode terminals (161, 162, 171 and 172) and the negative electrode terminals (167 and 177) are disposed at positions greatly separated from each other in a left-right direction, and three signal terminals (T terminal 164, V terminal 165, and LS terminal 166) are provided between them. In the present example, a total of two sets of arm parts including one set on the upper left and right and one set on the lower left and right which extend in a horizontal direction are used as a part for a power terminal. The LD terminal 168 is provided on a left side of the negative electrode terminal pair (167 and 177). All the signal terminals (164 to 166, and 168) are fixed by soldering on a back surface of the circuit board 150 with leg parts thereof caused to pass through a plurality of mounting holes 151a and 151b formed in the circuit board 150 from the surface to the back surface. As described above, electronic elements (not illustrated) are mounted on the circuit board 150, a plurality of connection terminals is fixed by soldering, and then a resin (not illustrated) is applied to the surface of the circuit board 150 for waterproofing and dustproofing.

The lower case 101 has a substantially rectangular parallelepiped shape with an upper surface open. Slits 104 are provided substantially at a center of a front wall. Slits 134 of the upper case 110 are used as an inflow port for allowing cooling air sent from a charging device side to flow into an internal space of the battery pack 100 when charging is performed with the charging device, and the slits 104 of the lower case 101 are used as a discharge port for the cooling air.

Connection of an output from the battery cell side to the circuit board 150 is performed via lead-out tabs 261a, 266a, 271a, and 276a for connection extending upward in a plate shape. Also, end portions 294b, 296b to 299b of lead wires from intermediate connection points of the battery cells connected in series are disposed to extend upward and are soldered on the circuit board. Further, intermediate lead-out tabs 262a and 263a from the intermediate connection points of the battery cells connected in series are disposed to extend upward to be connected to the circuit board 150. Screw bosses 247a and 247b for fixing the circuit board 150 are formed on an upper side of the separator 245.

Next, shapes of two sets of the power terminals will be described with reference to Fig. 5. Fig. 5 is a partial view of the circuit board 150 of the battery pack 100, in which only a positive electrode terminal pair (the upper positive electrode terminal 162 and the lower positive electrode terminal 172) and a negative electrode terminal pair (the upper negative electrode terminal 167 and the lower negative electrode terminal 177) fixed to the circuit board 150 are illustrated. (A) of Fig. 5 is a partial perspective view illustrating shapes of the positive electrode terminals (162 and 172) and the negative electrode terminals (167 and 177) of the battery pack 100 of the present example and a view illustrating a connection circuit at the time of high voltage output. (B) of Fig. 5 is a partial perspective view illustrating a connection status between a terminal part 50 of a high voltage electric device and the terminals on the battery pack 100 side. As illustrated in (A) of Fig. 5, the upper positive electrode terminal 162 and the lower positive electrode terminal 172 are disposed to be aligned in the slot 122 (see Fig. 2) of the battery pack 100. The upper positive electrode terminal 162 and the lower positive electrode terminal 172 are formed by press processing of a metal plate, and the leg parts are firmly fixed to the circuit board 150 by soldering or the like. The upper positive electrode terminal 162 and the lower positive electrode terminal 172 are disposed at a distance from each other and are in an electrically non-conductive state. Similarly, the upper negative electrode terminal 167 and the lower negative electrode terminal 177 are disposed to be aligned in the slot 127 (see Fig. 2). The upper positive electrode terminal 162 and the upper negative electrode terminal 167 are the same metal part as each other, and the lower positive electrode terminal 172 and the lower negative electrode terminal 177 are the same metal part as each other.

Inside the battery pack 100, an upper cell unit (first cell unit) 146 and a lower cell unit (second cell unit) 147 in each of which five lithium-ion battery cells are connected in series are accommodated, a positive electrode of the upper cell unit 146 is connected to the upper positive electrode terminal 162 corresponding to a first positive electrode terminal, and a negative electrode of the upper cell unit 146 is connected to the lower negative electrode terminal 177 corresponding to a first negative electrode terminal. Similarly, a positive electrode of the lower cell unit 147 is connected to the lower positive electrode terminal 172 corresponding to a second positive electrode terminal, and a negative electrode of the lower cell unit 147 is connected to the upper negative electrode terminal 167 corresponding to a second negative electrode terminal. In such a form of the battery pack 100, when a positive electrode input terminal on the power tool main body 1 side is connected to the upper positive electrode terminal 162 and a negative electrode input terminal thereof is connected to the upper negative electrode terminal 167, and the lower positive electrode terminal 172 and the lower negative electrode terminal 177 are electrically connected as illustrated by a dotted line 59, an output of the series connection of the upper cell unit 146 and the lower cell unit 147, that is, a rating of 36 V, is output from the battery pack 100 to a load device 70 of the power tool main body 1.

The positive electrode terminals for output are disposed such that the upper positive electrode terminal 162 and the lower positive electrode terminal 172 that are electrically independent of each other are disposed to be aligned in a front-rear direction when viewed from the mounting position of the circuit board 150. These are a plurality of terminals (162 and 172) disposed close to each other, and function as a switching terminal group used for voltage switching. The upper positive electrode terminal 162 and the lower positive electrode terminal 172 have arm part sets (arm parts 162a and 162b, arm parts 172a and 172b) extending forward. Here, the arm parts 162a and 162b and the arm parts 172a and 172b are each at positions away from each other in a vertical direction, and positions of each fitting portion of the arm parts in a front-rear direction are substantially the same as each other. This positive electrode terminal pair (162 and 172) is disposed in the single slot 122. The negative electrode terminal pair also has the same shape as the positive electrode terminal pair and is constituted by the upper negative electrode terminal 167 and the lower negative electrode terminal 177, and this negative electrode terminal pair (167 and 177) is disposed inside the single slot 127. These are a plurality of terminals (167 and 177) disposed close to each other, and function as a switching terminal group used for voltage switching. Inside the slot 127, an arm part set of the upper negative electrode terminal 167 is disposed on an upper side, and an arm part set of the lower negative electrode terminal 177 is disposed below the arm part set of the upper negative electrode terminal 167. Although not illustrated in Fig. 5, a positive electrode pair for charging (the upper positive electrode terminal 161 and the lower positive electrode terminal 171; see Fig. 4) is disposed on a right side of the positive electrode terminal pair for discharging (the upper positive electrode terminal 162 and the lower positive electrode terminal 172). The positive electrode terminal pair for charging (161 and 171) have the same shape as those of the upper positive electrode terminal 162 and the lower positive electrode terminal 172.

(B) of Fig. 5 is a view illustrating a connection relationship between the terminal part 50 of the power tool main body 1 having a rating of 36 V and the connection terminals (162, 167, 172, and 177) on the battery pack 100 side. The terminal part 50 is provided at the battery pack mounting part 2c of the power tool main body 1. Device-side terminals (52, 59a, 54 to 56, 57, 59b, and 58) corresponding to the slots 121 to 128 (see Fig. 2) of the battery pack 100 are provided in the terminal part 50 and fixed by casting in a base 51 made of a synthetic resin. In the base 51, a connection terminal part on an upper side and a plate-shaped terminal part on a lower side having the same reference sign are formed of an electrically conductive metal plate. Here, the device-side terminal is not provided at a position corresponding to the slot 123 (see Fig. 2). As input terminals for power, the positive electrode input terminal 52 and the negative electrode input terminal 57 for receiving power are provided with a small size above short-circuit terminals 59a and 59b. The positive electrode input terminal 52 and the short-circuit terminal 59a are not electrically connected. Also, the negative electrode input terminal 57 and the short-circuit terminal 59b are not electrically connected.

When the battery pack 100 is mounted, the positive electrode input terminal 52 is fitted only to the upper positive electrode terminal 162, and the negative electrode input terminal 57 is fitted only to the upper negative electrode terminal 167. Also, the small terminals 59a and 59b for short-circuiting the lower positive electrode terminal 172 and the lower negative electrode terminal 177 are provided in the terminal part 50 of the power tool main body 1. The small terminals 59a and 59b are both end portions of a short circuit 59 and are connected inside the base 51.

The positive electrode input terminal 52 is constituted by a terminal part which is a portion to be fitted with the upper positive electrode terminal 162 and formed in a flat plate shape, and a terminal part which is one to be connected to the circuit board side of the power tool main body 1 side and protruding upward from the base 51. The positive electrode input terminal 52 is cast into the base 51 made of a synthetic resin. The negative electrode input terminal 57 is configured in the same manner as the positive electrode input terminal 52 and a height of the terminal is of a size slightly smaller than half that of the other terminal parts (54 to 56, and 58). The other terminal parts (54 to 56, 58) are terminals for signal transmission. Recessed parts 51a and 51b for being sandwiched by the housing are provided on a front side and a rear side of the synthetic resin base 51 of the terminal part 50.

In (B) of Fig. 5, when the battery pack 100 is mounted, when the battery pack 100 is relatively moved with respect to the power tool main body 1 in an insertion direction, the positive electrode input terminal 52 and the short-circuit terminal 59b are inserted into the inside through the same slot 122 (see Fig. 2) and are respectively fitted into the upper positive electrode terminal 162 and the lower positive electrode terminal 172. At this time, the positive electrode input terminal 52 is press-fitted between the arm parts 162a and 162b of the upper positive electrode terminal 162 in a manner of pushing and extending between the fitting portions of the upper positive electrode terminal 162, and the short-circuit terminal 59b is press-fitted between the arm parts 172a and 172b of the lower positive electrode terminal 172 in a manner of pushing and extending therebetween. Similarly, the negative electrode input terminal 57 and the short-circuit terminal 59b are inserted into the inside through the same slot 127 (see Fig. 2) and are respectively fitted into the upper negative electrode terminal 167 and the lower negative electrode terminal 177. At this time, the negative electrode input terminal 57 is press-fitted between the arm parts 167a and 167b of the upper negative electrode terminal 167 in a manner of pushing and extending between the fitting portions. Further, the short-circuit terminal 59b is press-fitted between the arm parts 177a and 177b of the lower negative electrode terminal 177 in a manner of pushing and extending therebetween. When the connection form of (B) of Fig. 5 as described above is realized, an output of the series connection of the upper cell unit 146 and the lower cell unit 147, that is, a rating of 36 V is output from the battery pack 100.

(A) and (B) of Fig. 6 are views illustrating a connection state when the battery pack 100 of the present example is mounted to the power tool main body 1 (see Fig. 3) for 18 V. When the battery pack 100 is attached to the power tool main body 1, a terminal part of a positive electrode input terminal 82 is press-fitted in a manner of pushing and extending two opening end portions of the upper positive electrode terminal 162 and the lower positive electrode terminal 172 so that a region of a part of the upper side of the terminal part of the positive electrode input terminal 82 comes into contact with the upper positive electrode terminal 162, and a region of a part of the lower side thereof comes into contact with the lower positive electrode terminal 172. When the terminal part of the positive electrode input terminal 82 is simultaneously fitted to the arm parts 162a and 162b of the upper positive electrode terminal 162 and the arm parts 172a and 172b of the lower positive electrode terminal 172 as described above, the two positive electrode terminals (162 and 172) are brought into a short-circuit state. Similarly, a terminal part of a negative electrode input terminal 87 is press-fitted in a manner of pushing and extending two opening end portions of the upper negative electrode terminal 167 and the lower negative electrode terminal 177 so that a region of a part of the upper side of the terminal part of the negative electrode input terminal 87 comes into contact with the upper negative electrode terminal 167, and a region of a part of the lower side thereof comes into contact with the lower negative electrode terminal 177. When the terminal part of the negative electrode input terminal 87 is simultaneously fitted to the arm parts 167a and 167b of the upper negative electrode terminal 167 and the arm parts 177a and 177b of the lower negative electrode terminal 177 as described above, the two negative electrode terminals (167 and 177) are brought into a short-circuit state, and an output of the parallel connection of the upper cell unit 146 and the lower cell unit 147, that is, a rating of 18 V is output to the power tool main body 1.

As described above, the battery pack 100 of the present example is mounted to either the power tool main body 1 for 18 V (see Fig. 3) or the power tool main body for 36 V (not illustrated), and thereby the output of the battery pack 100 is automatically switched. Since the voltage switching is not performed by the battery pack 100 side but is automatically performed according to a shape of the terminal part on the power tool main body 1 side, there is no likelihood that a voltage setting error will occur at all. Also, since it is not necessary to provide a dedicated voltage switching mechanism such as a mechanical switch on the battery pack 100 side, a battery pack having a simple structure, a low likelihood of failure, and a long service life can be realized.

When the battery pack 100 is charged using an external charging device (not illustrated), the battery pack 100 can be charged with the same charging device as a conventional battery pack for 18 V. Since the slot 121 of the battery pack 100 includes a positive electrode terminal for charging having the same shape as the upper positive electrode terminal 162 and the lower positive electrode terminal 172, a positive electrode terminal for charging (not illustrated) may be connected to a positive electrode terminal of an external charging device (not illustrated) instead of the positive electrode terminals for discharging (162 and 172).

Next, a status of stacking and a method of wiring the battery cells using the separator 245 (see Fig. 4) will be described with reference to the exploded perspective view of Fig. 7. The separator 245 (see Fig. 4) is a stack of 10 battery cells 146a to 146e and 147a to 147e in which five battery cells are each stacked in two upper and lower stages. Although Fig. 7 illustrates a state in which the battery cells 146a to 146e and 147a to 147e are drawn out from the separator 245, at the time of assembly, they are inserted into a cylindrical space 246 of the separator 245, terminals exposed on both the left and right sides of the separator are connected to each other by connection plates 262 to 265 and 272 to 275, and lead-out plates 261, 266, 271, and 276 are connected to the battery cells. Thereafter, insulating sheets 278a and 278b are adhered to the connection plates 262 to 265 and 272 to 275, and the lead-out plates 261, 266, 271, and 276 for insulation.

Axes of the battery cells are stacked to be parallel to each other, cells are disposed so that directions of the adjacent cells are alternately reversed, and positive electrode terminals and negative electrode terminals of adjacent battery cells are connected using the metal connection plates 262 to 265 and 272 to 275. The terminals on both sides of the battery cells and the connection plates 262 to 265 and 272 to 275 are fixed by spot welding at a plurality of positions. Here, the five battery cells connected in series and installed on the upper stage form the upper cell unit 146 (to be described in detail with Fig. 9), and the five battery cells connected in series and installed on the lower side form the lower cell unit 147 (to be described in detail with Fig. 9).

For the battery cells 146a to 146e and 147a to 147e, lithium-ion battery cells (not illustrated) each having a diameter of 18 mm and a length of 65 mm which are called 18650 size and capable of being charged and discharged a plurality of times can be used, but the size and number of battery cells are arbitrary. Two electrodes are provided at both ends in a length direction of the battery cell. Of the two electrodes, one is a positive electrode and the other is a negative electrode.

The positive electrode of the upper cell unit 146 is connected to the circuit board 150 using the lead-out plate 261 on which the lead-out tab 261a is formed, and the negative electrode of the upper cell unit 146 is connected to the circuit board 150 using a lead-out plate 266 on which the lead-out tab 266a is formed. Similarly, the positive electrode of the lower cell unit 147 is connected to the circuit board 150 using the lead-out plate 271 on which the lead-out tab 271a is formed, and the negative electrode of the lower cell unit 147 is connected to the circuit board 150 using a lead-out plate 276 on which the lead-out tab 276a is formed. Tab holders 250 to 252 and 255 to 257 for holding the tabs of the lead-out plates 261, 266, 271, and 276 in a shape of a bent thin metal plate are formed on an upper surface of the separator 245. The tab holders 250 to 252 and 255 to 257 are tab holding parts formed to hold the lead-out tabs 261a, 262a, 263a, 266a, 271a, and 276a bent in an L shape, are integrally formed as a recessed part having a seat surface, a back surface, and both side surfaces when the separator 245 is formed, and the lead-out tabs 261a, 262a, 263a, 266a, 271a, and 276a are fitted into the recessed parts. Two screw bosses 247a and 247b for screwing the circuit board 150 are formed on an upper portion of the separator 245. Right sides of the lead-out plates 261 and 271 and the connection plates 263, 265, 273, and 275 are covered with the insulating sheet 278a, and a left side of the lead-out plate 266 and 276 and the connection plates 262, 264, 272, and 274 are covered with the insulating sheet 278b. The insulating sheet 278a is made of a material that does not conduct electricity, and a sealing material is applied to an inner portion thereof.

Fig. 8 is a circuit diagram of the power tool main body (high voltage electric device) 1 to which the battery pack 100 is mounted and has a configuration in which the short circuit (short-circuit path) 59 is incorporated in the power tool main body 1. The battery pack 100 is shown on the right side, and here, only the necessary configurations are extracted and shown for ease of explanation. In order to take out a voltage of 36 V from the battery pack 100 to the power tool main body 1 having a rating of 36 V, the short circuit 59 indicated by a thick line is provided in the terminal part 50 on the power tool main body 1 side. The short circuit 59 can be formed of a short-circuit element made of a metal plate and can be formed by casting a U-shaped bent metal plate into the base 51 made of a synthetic resin together with other device-side terminals such as the positive electrode input terminal 52 and the negative electrode input terminal 57 as illustrated in Fig. 5. One end portion of the U-shaped bent metal plate serves as the short-circuit terminal 59a, and the other end portion serves as the short-circuit terminal 59b. When the battery pack 100 is simply mounted to the terminal part 50 having such a shape, DC power having a rating of 36 V is supplied to the positive electrode input terminal 52 and the negative electrode input terminal 57. The power tool main body 1 includes a microcontroller 60 for controlling rotation of a motor 3. A voltage (5 V or 3.3 V) for driving the microcontroller 60 is supplied by a power supply device 61 to which a voltage between both ends of the short-circuit terminal 59a and the negative electrode input terminal 57 is input. When the terminal part 50 having the short circuit 59 is provided in the power tool main body 1 in this way, a series connection circuit of the upper cell unit 146 and the lower cell unit 147 can be established simply by mounting the battery pack 100 of the present example having two positive electrode terminals (162 and 172) and two negative electrode terminals (167 and 177).

Fig. 9 is a block diagram showing an internal circuit of the battery pack 100 of the present example. Here, only basic components for explaining a connection status of a microcontroller 154 and protection ICs 180 and 190 with respect to the upper cell unit 146 and the lower cell unit 147 are shown, and illustration of other related circuits, particularly, circuits for communicating with signal terminals on the main device side or the like is omitted. As illustrated in Fig. 4, the battery pack 100 is configured to include the upper positive electrode terminal (upper +) 162, the lower positive electrode terminal (lower +) 172, the upper negative electrode terminal (upper -) 167, and the lower negative electrode terminal (lower +) 177. In addition to these, the battery pack 100 includes other signal terminal groups (T terminal, V terminal, LS terminal, and LD terminal), but illustrations thereof are omitted here. An output of the upper cell unit 146 is connected to the upper positive electrode terminal 162 and the lower negative electrode terminal 177. That is, the positive electrode (+ output) of the upper cell unit 146 is connected to the upper positive electrode terminal 162, and the negative electrode (-output) of the upper cell unit 146 is connected to the lower negative electrode terminal 177. Similarly, the positive electrode (+ output) of the lower cell unit 147 is connected to the lower positive electrode terminal 172, and the negative electrode (- output) of the lower cell unit 147 is connected to the upper negative electrode terminal 167.

The protection ICs 180 and 190 for monitoring voltages of the battery cells are connected to the upper cell unit 146 and the lower cell unit 147, and the microcontroller 154 is connected to the protection ICs 180 and 190. When a voltage between both ends of each battery cell of the upper cell unit 146 is input, the protection IC 180 executes a cell balance function, a cascade connection function, and a disconnection detection function in addition to an overcharge protection function and an over-discharge protection function, and the protection IC 180 is an integrated circuit available on the market as a "protection IC for a lithium-ion battery." Also, when the voltage of the battery cell of the upper cell unit 146 has been dropped below a predetermined value and become an over-discharged state, the protection IC 180 outputs a signal (high signal) 183 indicating the over-discharge to the microcontroller 154, and when the voltage of the battery cell of the upper cell unit 146 has reached a predetermined value or more at the time of charging and become an overcharged state, a signal (high signal) 184 indicating the overcharge is output to the microcontroller 154.

The protection IC 190 is connected to the lower cell unit 147. Here, the microcontroller (Micro Controller Unit) 154 is connected in the circuit of the lower cell unit 147, that is, in the circuit between the lower positive electrode terminal 172 and the upper negative electrode terminal 167. An output from the protection IC 180 (an over-discharge signal 183 and an overcharge signal 184) and an output from the protection IC 190 (an over-discharge signal 191 and an overcharge signal 192) are input to the microcontroller 154. The microcontroller 154 includes, for example, a voltage detection circuit called an analog front end (AFE) to measure a current value flowing from an output voltage of a current detection circuit 193 to the lower cell unit 147. A power supply for driving the microcontroller 154 is generated by a power supply circuit 185 connected to the lower cell unit 147, and a power supply voltage (VDD1) is supplied to the microcontroller 154. A shunt resistor 194 for measuring a current value is provided on the ground side of the lower cell unit 147.

The microcontroller 154 monitors a current value and a cell temperature, and monitors states of the upper cell unit 146 and the lower cell unit 147 to control an operating status of the two in an integrated manner. Also, when the power tool main body 1 needs to be stopped urgently, a discharge inhibit signal is sent to the electric device main body side via the LD terminal (not shown). The protection IC 190 monitors a voltage of the battery cell in the lower cell unit 147 and sends the over-discharge signal 191 to the microcontroller 154 when a state in which the voltage has dropped to a predetermined lower limit value (over-discharge state) is detected. The microcontroller 154 includes a timer circuit and a storage device together with a microprocessor (which are not shown). The microcontroller 154 stores a battery voltage, a temperature, and a count value of the number of times of charging which have been monitored in the storage device.

A wireless communication circuit 155 is connected to the microcontroller 154. An antenna 156 is connected to the wireless communication circuit 155. Here, a wireless communication module 153 available on the market is used and mounted on the circuit board 150. The wireless communication module 153 is one in which the wireless communication circuit 155 and the antenna 156 are collectively mounted on a common base (not illustrated). Here, the wireless communication module 153 or the antenna 156 corresponds to a wireless communication unit in the present invention.

When the battery pack 100 is mounted to an external charging device (not shown) and is being charged, in a case in which the protection IC 190 detects that a voltage of the battery cell exceeds a predetermined upper limit value, the protection IC 190 sends the overcharge signal 192 indicating an overcharge state to the microcontroller 154. The microcontroller 154 stores the information in the storage device and sends a charge stop signal to the charging device (not shown) via the LS terminal (not shown).

The power supply circuit 185 generates a power supply for operating the microcontroller 154 using the power of the lower cell unit 147. The power supply circuit 185 for the microcontroller 154 is provided on the lower stage side, and the microcontroller 154 is provided in the circuit of the lower cell unit 147. Due to this disposition of the microcontroller 154, the microcontroller 154 can be operated stably even when the output voltage is configured to be switched between the rating of 18 V and 36 V. The microcontroller 154 can switch between holding and releasing of the power supply voltage (VDD1) applied to itself and has a normal operation state (normal mode) and an operation stop state (so-called sleep mode).

An output of an upper voltage detection circuit 182 connected to the upper positive electrode terminal 162 is input to the microcontroller 154. This output indicates a potential of the upper cell unit 146 when the battery pack 100 is not mounted to the power tool main body 1 or an external charging device (not shown). On the other hand, when the battery pack 100 is mounted to the power tool main body 1 for low voltage (18 V), since the upper positive electrode terminal 162 and the lower positive electrode terminal 172 are connected, the positive electrodes of the upper cell unit 146 and the lower cell unit 147 have the same potential, and the negative electrodes thereof have the same potential. From this, the microcontroller 154 can determine whether the battery pack 100 is in a state of not being mounted, is mounted to a low-voltage device main body, or is mounted to a high voltage device by comparing the potential of the upper positive electrode terminal 162 with the potential of the lower positive electrode terminal 172. Further, in order to detect the potential of the lower positive electrode terminal 172, it is preferable to configure the microcontroller 154 to acquire a positive electrode potential of a battery cell 147a at a highest level among the battery cells in the lower cell unit 147. Although not illustrated in Fig. 5, in a situation in which the power supply from the battery pack 100 has to be stopped, for example, when an excessive current during discharge, a decrease in cell voltage during discharge (over-discharge), an abnormal rise in cell temperature (overtemperature), or the like occurs, an operation of the power tool main body 1 can be stopped quickly by transmitting the LD signal to the power tool main body side via the microcontroller 154.

Fig. 10 is a side view of the separator 245 after the parts illustrated in Fig. 5 are assembled, in which (A) of Fig. 10 is a right side and (B) of Fig. 10 is a left side view. Here, for ease of explanation, only two sets of the positive electrode terminal (162 and 177) and the negative electrode terminal (167 and 177) for discharging are illustrated as the connection terminal groups, and illustration of the other connection terminals (161, 164 to 166, 168, and 171) is omitted. Also, a status before a resin layer on the circuit board 150 is formed is illustrated. The upper cell unit 146 is constituted by the battery cells 146a to 146e disposed on the upper stage side and is connected to the circuit board 150 by the lead-out tab 261a extending upward from the lead-out plate 261 on the positive electrode side and the lead-out tab 266a extending upward from the lead-out plate 266 on the negative electrode side. Slit-shaped through holes (not illustrated) are opened in the circuit board 150, and the lead-out tabs 261a and 266a are caused to pass through the through holes from a lower side to an upper side so that upper portions of the lead-out tabs 261a and 266a are exposed upward from the surface of the circuit board 150. When those portions are soldered, the circuit board 150 and the lead-out tabs 261a and 266a are electrically connected. Similarly, the lower cell unit 147 is constituted by the battery cells 147a to 147e disposed on the lower stage side and is connected to the circuit board 150 by the lead-out tabs 271a and 276a for connection extending upward from the lead-out plates 271 and 276 provided at both ends. Slit-shaped through holes (not illustrated) are opened in the circuit board 150, and the lead-out tabs 271a and 276a are caused to pass through the through holes from a lower side to an upper side so that upper portions of the lead-out tabs 271a and 276a are exposed upward from the surface of the circuit board 150. When those portions are soldered, the circuit board 150 and the lead-out tabs 271a and 276a are electrically connected.

The intermediate lead-out tab 263a extending upward is provided to the connection plate 263 illustrated in (A) of Fig. 10, and the intermediate lead-out tab 262a extending upward is provided to the connection plate 262 illustrated in (B) of Fig. 10. The intermediate lead-out 262a and 263a are bent bodies of thin metal plates that form the intermediate lead-out tabs 262a and 263a by extending plate-shaped members upward from the connection plates 262 and 263 disposed on the upper stage side, bending them inward along the circuit board 150, and bending them upward again. Slit-shaped through holes (not illustrated) are opened in the circuit board 150, and the intermediate lead-out tabs 262a and 263a are caused to pass through the through holes from a lower side to an upper side so that upper portions of the intermediate lead-out tabs 262a and 263a are exposed upward from the surface of the circuit board 150. The intermediate lead-out tabs 262a and 263a are fixed to the circuit board 150 by soldering. A width (distance in a front-rear direction) of the intermediate lead-out tabs 262a and 263a is formed to be smaller than a width (length in the front-rear direction) of the lead-out tab 261a of (A) of Fig. 10 and the lead-out tab 266a of Fig. 10. This is because the lead-out tabs 261a, 266a, 271a, and 276a are terminals for power output and are terminals through which a high voltage and a large amount of current flow, whereas the intermediate lead-out tabs 262a and 263a are terminals which are connected for measuring an intermediate potential and through which only a small amount of current flows. An intermediate lead-out tab can also be formed on the other connection plate 264 and connection plate 265 provided on the upper stage side. However, here, from a relationship of forming a wiring pattern, it is configured such that the connection terminals 264a and 265a are provided to connect with the circuit board 150 by lead wires (not illustrated). Since it is difficult to connect the connection plates 272 to 275 provided on the lower stage side to the circuit board 150 by lead-out tabs, the connection terminals 272a to 275a are provided to connect with the circuit board 150 by lead wires 296 to 299.

Fig. 11 is a perspective view illustrating a state in which the circuit board 150 is fixed to the separator 245 and illustrates a state seen from the above left front. In the circuit board 150, the upper portions of the tabs 261a, 266a, 271a, and 276a are exposed upward from the surface of the circuit board 150 from slit-shaped through holes 159a to 159d. When the exposed portions of those tabs are soldered, the circuit board 150 and the lead-out tabs 261a, 266a, 271a, and 276a are electrically connected. As described above, the battery cells 146a to 146e of the upper cell unit 146 are directly connected to the circuit board 150, and the battery cells 147a to 147e of the lower cell unit 147 are directly connected to the circuit board 150. Also, the lead wires 296 to 299 for measuring potentials of the connection plates 262 to 264 and the connection plates 272 to 274 (however, 297 and 299 cannot be seen in Fig. 11) are connected. The end portions 294b, 296b, 297b, 298b, and 299b of the lead wires illustrated in Fig. 4 are soldered to the circuit board 150. The connection plates 262 and 263 (see Fig. 12) that are close to the circuit board 150 are bent in an L shape and vertical plate portions thereof are directly connected to the circuit board 150 using the intermediate lead-out tabs 262a and 263a extending upward.

The lead-out tabs 261a and 266a for output (+ output and - output) of the upper cell unit 146 are shaped to have a substantially L shape when viewed from the front or the rear and are disposed such that a longitudinal direction thereof is parallel to a long side of the substantially rectangular circuit board 150. The lead-out tabs 261a and 266a are bent bodies of thin metal plates in which bent vertical wall portions thereof are used as the lead-out tabs 261a and 266a by causing surfaces of the lead-out plates 261 and 266 fixed to the terminals of the battery cells to be extended upward and bent inward, slightly extending them inward in a horizontal direction along the upper surface of the separator, and bending them upward in an L shape at an appropriate position. However, the same lead-out method cannot be employed for the battery cells disposed in the lower stage, because electrodes for the battery cells are positioned in the upper stage. Therefore, in the present example, the lead-out plate 271 from a terminal surface 271b (see also (A) of Fig. 13) of the lower cell is extended forward and then bent at a right angle to the left side to form a side surface portion 271c, and the side surface portion 271c is extended upward. That is, the lead-out plate 271 was extended upward along the side surface on the short side in a top view of the separator 245 and bent from the front side surface to the rear side of the separator 245 to form a horizontal surface portion 271d, and the horizontal surface portion 271d was extended upward at a right angle in a tab shape to form the lead-out tab 271a. The lead-out tab 271a is passed through the slit-shaped through hole 159c formed in the circuit board 150 from the back surface to the surface and is soldered. The lead-out tabs 271a and 276a are disposed so that a longitudinal direction thereof is parallel to a short side of the substantially rectangular shape. With the formation as described above, the lead-out plate 271 from the battery cell on the lower stage side can be disposed without interfering with the lead-out plate of the battery cell on the upper stage side.

The lead-out plate 276 from the negative terminal on the lower stage is also drawn out in the same manner (see Fig. 12 described later) and is drawn out to the lead-out tab 276a. In this way, an output from the battery cells disposed on the lower stage can be efficiently drawn out to an upper portion of the battery cells on the upper stage, that is, an upper surface portion of the separator, by drawing out the separator upward utilizing not only both the left and right lateral side surfaces but also the front side surface and the rear side surface. The lead-out plate 271 further includes a portion in which a width of the connection path is greatly reduced, that is, a fuse part 271e. The fuse part 271e is a portion obtained by forming a cutout part 271f from a right side of the lead-out plate 271 and forming a cutout part 271g from a left side thereof so that a width (width in a left-right direction) of the remaining portion is sufficiently reduced, and due to the portion, a function as a power fuse is given to the lead-out plate 271. A similar fuse function is similarly provided in the vicinity of the lead-out tab 261a of the lead-out plate 261 (see Fig. 12) from the positive terminal of the upper cell unit 146. The oval connection plates 262, 264, 273, and 274 for connecting electrodes of adjacent battery cells are formed of a thin metal plate such as stainless steel and are fixed by spot welding to the battery cells.

The upper cell unit 146 includes the lead-out tab 261a for a positive output and the lead-out tab 266a for a negative output. Also, the lower cell unit 147 includes the lead-out tab 271a for a positive output and the lead-out tab 276a for a negative output. In the present example, installation positions of the lead-out tabs 261a, 266a, 271a, and 276a are also designed. A left-right center line of the circuit board 150 or a center line between the positive electrode terminal pair (162 and 172) and the negative electrode terminal pair (167 and 177) is assumed to be a left-right center line A1 indicated by a dotted line. Also, a line connecting two center positions including a center position between the leg parts of the upper positive electrode terminal 162 and the lower positive electrode terminal 172 and a center position between the leg parts of the upper negative electrode terminal 167 and the lower negative electrode terminal 177 is assumed to be a virtual line A2 indicated by a dotted line. When the left-right center line A1 and the leg part center line A2 in a front-rear direction were drawn, the positive electrode lead-out tab 261a of the upper cell unit 146 was configured to be present in a region in which the leg part of the upper positive electrode terminal 162 was present, and the positive electrode lead-out plate 271a of the lower cell unit 147 was configured to be present in a region in which the leg part of the lower positive electrode terminal 172 was present. When the lead-out tabs 261a and 271a are disposed in this way, the lead-out tab 261a and the upper positive electrode terminal 162, and the lead-out plate 271a and the lower positive electrode terminal 172 can be efficiently connected by a wiring pattern disposed on the circuit board 150. Similarly, the negative electrode lead-out tab 276a of the lower cell unit 147 was configured to be present in a region in which the leg part of the upper negative electrode terminal 167 was present, and the negative electrode lead-out tab 266a of the upper cell unit 146 was configured to be present in a region in which the leg part of the lower negative electrode terminal 177 was present. When the lead-out tabs 276a and 266a are disposed in this way, the upper negative electrode terminal 167 and the lower negative electrode terminal 177 can be efficiently connected by the wiring pattern disposed on the circuit board 150.

Fig. 12 is a perspective view illustrating a state in which the circuit board 150 is fixed to the separator 245 and illustrates a state seen from the above right rear. Recessed parts 150c and 150d for positioning the circuit board 150 with respect to the separator 245 are formed on left and right edges in the vicinity of the center when viewed in a front-rear direction of the circuit board 150, and protruding parts 245c and 245d formed on the separator 245 formed on the separator 245 engage with them. Also, an abutting part 245e for holding a front end of the circuit board 150 is formed on the front side of the separator 245 and abuts against a front edge portion of the circuit board 150. Further, a terminal surface 261b extending parallel to the electrode of the battery cell and a horizontal surface part 261c bent in an orthogonal direction from the terminal surface 261b to the upper side of the separator 245 are formed in the lead-out plate 261, and the horizontal surface part 261c is upwardly extended at a right angle in a tab shape to form the lead-out tab 261a. A fuse part 261d is a portion in which a width (distance in a front-rear direction) thereof is reduced by forming a cutout part 261e in which a part of the horizontal surface is greatly cut out from the front side. Not only the lead-out plate 261 but also the other lead-out plates 266, 271, and 276, and the connection plates 262 to 265 and 272 to 275 are formed by subjecting a thin plate such as stainless steel to press processing. Therefore, it is not necessary to add a fuse element of a separate type to the upper cell unit 146 and the lower cell unit 147.

Fig. 13 is a view for explaining a method of connecting the lead-out plates 261, 266, 271, and 276 to the positive electrode terminals (162 and 172) and the negative electrode terminals (167 and 177) in the battery pack 100. (A) is a view from the front side, and (B) is a view from the rear side. Of the connection terminal groups, illustration of connection terminals other than the positive electrode terminals (162 and 172) and the negative electrode terminals (167 and 177) for discharge is omitted. The lead-out tab 261a, which is the + output of the upper cell unit 146, is connected to the circuit board 150 by a region circle 2 on a rear side of the upper positive electrode terminal 162. As indicated by the dotted line, the lead-out tab 261a and the upper positive electrode terminal 162 can be connected at a short distance in a linear manner. The lead-out tab 266a, which is the - output of the upper cell unit 146, is connected to the circuit board 150 by a region circle 3 on a front side of the lower negative electrode terminal 177. As indicated by the dotted line, the lead-out tab 266a and the lower negative electrode terminal 177 can be connected at a short distance in a linear manner. The lead-out tab 271a, which is the + output of the lower cell unit 147, is connected to the circuit board 150 by a region circle 1 on a front side of the lower positive electrode terminal 172. Therefore, as indicated by the dotted line, the lead-out tab 271a and the lower positive electrode terminal 172 can be connected at a short distance in a linear manner. The lead-out tab 276a, which is the - output of the lower cell unit 147, is connected to the circuit board 150 by a region circle 4 on a rear side of the upper negative electrode terminal 167. Therefore, as indicated by the dotted line, the lead-out tab 276a and the upper negative electrode terminal 167 can be connected at a short distance in a linear manner. As described above, since the wirings for power can be linearly connected to the connection terminals (162, 167, 172, and 177) like the four dotted lines illustrated on the circuit board 150, the wiring pattern thereof can be efficiently disposed on the circuit board as a thick wiring pattern without intersecting each other.

As described above, in the battery pack 100 of the present example, connections from the battery cells to the output terminal groups of the positive electrode terminals (162 and 172) and the negative electrode terminals (167 and 177) are realized by the wiring pattern on the circuit board 150. Therefore, it is preferable to install a wireless communication circuit or a wireless antenna at a position away from the wiring pattern. Then, there are only two candidates for rear of installation positions, one is a position in the vicinity of the left-right center near the front short side of the rectangular circuit board 150 in a top view and, the other is a position near a left-right center in the vicinity of the rear short side of the circuit board 150. However, in the present example, since four LEDs for checking a battery voltage are provided near a left-right center in the vicinity of the rear side indicated by the dotted line 152, and a switch 290 for a voltage check button is provided next to them, it is difficult to mount the wireless communication circuit there. Therefore, in the present example, it was configured to mount the wireless communication circuit and the antenna unit at the position indicated by the dotted line 152. By mounting at this position, it was possible to mount the wireless communication circuit at a position as far as possible from the connection terminal groups having a large number of metal portions on the back surface of the circuit board 150 and in an area as far as possible from main power lines (wiring for power).

Fig. 14 is a top view of the circuit board 150 of the battery pack 100 according to the present invention. Here, the wireless communication module 153 is disposed in a quadrangular region in a top view. The wireless communication module 153 is one in which the antenna 156 is formed on a resin base by a wiring pattern, in which the microcontroller 154 is provided at one end portion of the antenna 156, and a capacitor 157 is provided at the other end portion of the antenna 156. The capacitor 157 is provided at a distal end of the antenna 156 and is also used to solder the antenna 156 to the wiring pattern of the circuit board 150. The microcontroller 154 is a general-purpose microcontroller in which a Bluetooth (registered trademark) communication circuit is incorporated, and here, the microcontroller 154 performs control of consolidating information from the protection ICs 180 and 190 and transmitting the LD signal and the LS signal to an electric device main body to be mounted and the charger by being connected to the protection ICs 180 and 190 for charge/discharge control of the battery, monitors a status of the upper cell unit 146 and the lower cell unit 147, and periodically stores a state of the battery cells in a storage device (nonvolatile memory) (not illustrated). Further, the microcontroller 154 enables communication by Bluetooth (registered trademark) in response to a pairing request from the outside, and here, performs communication with the external terminal device 301 (see Fig. 1).

On the circuit board 150 of the present example, the metal terminals 261a, 266a, 271a, and 276a of the positive electrodes and the negative electrodes in which a large amount of current due to 18 V DC or 36 V DC flows are diagonally disposed. Also, as illustrated in Fig. 13, wirings from the metal terminals 261a, 266a, 271a, and 276a to the connection terminal group 160 are performed by a circuit pattern formed on the circuit board 150 (further, wirings of these using lead wires may also be used). As described above, there is a portion in which a high current at a high voltage flows in the vicinity of the wireless communication module 153, and furthermore, presence of large metal terminals hinders wireless communication. Therefore, in the present example, in order to reduce these effects and improve a radiation efficiency from the antenna 156, the wireless communication module 153 was disposed substantially at a center of a front side edge portion of the circuit board 150 with a mounting direction of the battery pack 100 as a reference. Moreover, the antenna 156 was positioned on a front side of the microcontroller 154 so that it was disposed to be as far away from the connection terminal group 160 as possible. With this disposition, since peripheries of the antenna 156, particularly the front side, the upper side, and the lower side, are not necessary to be covered by a metal portion radio waves are satisfactorily radiated from the antenna 156.

When it is assumed that the wireless communication module 153 is disposed in the vicinity of the center of the circuit board 150, for example, near the position indicated by an arrow 150b, there are metal connection terminals on the front side, metal terminals (the intermediate lead-out tabs 262a and 263a, and the lead-out tabs 261a and 276a) extending from the battery cells on the right and left sides, and protection ICs 180 and 190 and the like on the rear, and thereby the peripheries are surrounded by metal parts. Moreover, when an electric device to be mounted is an impact tool as illustrated in Fig. 3, a control circuit board (not illustrated) on the power tool main body side is mounted on an upper side of the arrow 150b, and this is not preferable as a radiation environment for radio waves.

It is also conceivable that the wireless communication module 153 is disposed near a left-right center at a rear edge portion of the circuit board 150. However, the switch unit for voltage check (see 290 in Fig. 13) and five LEDs 158 are mounted in the vicinity of the mounting hole 151b on the rear. Therefore, the wireless communication module 153 cannot be mounted at that position. In the present example, in comprehensive consideration of the above viewpoints, when a front region of the connection terminal group 160 of the circuit board 150 was divided into three equal sections in a left-right direction, the connection tabs from the battery cells were disposed in the regions on both left and right sides, and the wireless communication module 153 was mounted in the central region.

Fig. 15 is a top view illustrating a state in which the module of wireless communication is removed in the circuit board 150 of Fig. 14. A difference from Fig. 14 is that a soldering pad (land) group 195 formed on the circuit board 150 is illustrated with the wireless communication module 153 portion removed. Although not illustrated here, a rear view of the wireless communication module 153 also has a shape corresponding to the connection pad group 195, and these are soldered by a reflow process.

Fig. 16 is a cross-sectional view along line A-A of the circuit board 150 of Fig. 14. Here, only a size of the wireless communication module 153 and the protection IC 190 are illustrated, and illustration of metal terminals and mounted elements other than those is omitted. The microcontroller 154 is covered with a metal cover, and the wiring of the antenna 156 is sufficiently small compared to the cover. Therefore, when radiation of the radio waves from the antenna 156 is considered, it is better to position the antenna 156 on a front side of the microcontroller 154. Also, a control circuit of the battery cell including the protection IC 190 is disposed behind the connection terminal group 160.

Fig. 17 is a front view of the circuit board 150 of the battery pack 100 of Fig. 14. This figure also illustrates only the size of the wireless communication module 153 (the microcontroller 154, the antenna 156, and the capacitor 157) and the protection IC 180. From this figure, it can be understood that the antenna 156 is disposed to be in close contact with the circuit board 150.

Fig. 18 is a view illustrating a status of silicone application on the circuit board 150 of the battery pack 100 according to the present invention. When all the electronic elements mounted on the circuit board 150 are soldered, and furthermore, soldering to the connection terminal groups is completed, a silicone resin layer is formed on almost all of the upper surface of the circuit board 150 for dustproofing and waterproofing purposes. Although formation of the silicone resin layer can be considered in various ways, for example, it can be formed by application. At this time, when silicone is applied to all the portion in which the antenna and the microcontroller are integrated into one module for dustproofing and waterproofing purposes, since the silicone resin layer is also formed on the antenna, the silicone itself may be a shield for radiation of radio waves. Therefore, in the present example, application of the silicone resin onto the antenna unit was avoided as far as possible. However, in a mass production process, demanding detailed restrictions on silicone application can be a factor that greatly reduces a production efficiency, and at the same time, may increase a rate of defects and increase individual differences in the performance of finished products. Therefore, in the present example, a waterproof wall is formed by a rubber frame body 281 so that the silicone resin is not applied to an inner portion of the frame body 281 serving as the waterproof wall. The frame body 281 is integrally formed with rubber and is positioned to be fitted into an outer frame portion of the microcontroller 154. In a state in which the upper case 110 and the lower case 101 of the battery pack 100 are integrated, it is configured such that an upper surface of the frame body 281 is in contact with a surface of the upper case 110 on the cell unit side and there is no gap between the frame body 281 and the upper case 110. Thereby, water and dust do not enter the antenna unit even without applying the silicone resin on the antenna unit. The frame body 281 corresponds to an inhibiting part and a sealing member in the present invention.

The silicone resin is applied on the entire upper surface of the circuit board 150 as illustrated by hatching with wavy lines. In the connection terminal group 160, the resin is applied only around the leg parts to be soldered. On the rear side of the connection terminal group 160, the resin is applied to all portions except for both left and right sides 285a and 285b on which the resin does not need to be applied. Although not visible in Fig. 18, almost the entire back surface of the circuit board 150 is preferably covered with a silicone resin.

Fig. 19 is a perspective view of the frame body 281 of Fig. 18. The frame body 281 is manufactured by integrally forming rubber and is fitted into the antenna unit (the antenna wire 156 and the capacitor 157) and the outer frame portion of the microcontroller 154. Instead of bringing the frame body 281 into contact with the upper case 110 of the battery pack 100, a rubber sheet 282 may be further provided on an upper side of the frame body 281. Thereby, water and dust do not enter the antenna unit even without applying the silicone resin to the antenna unit. The rubber sheet 282 may be fixed to the upper surface of the frame body 281 by adhesion.

Fig. 20 is a view illustrating a status of silicone application on the circuit board 150 by a method different from that of Fig. 18. Here, instead of limiting longitudinal and lateral directions of the microcontroller 154 by the frame body 281, a sheet-shaped rubber 283 was used to cover not only the front, rear, left, and right of the microcontroller 154 but also the upper surface. However, when the antenna 156 is also covered, there is a likelihood that a radiation efficiency of radio waves may be lowered, and thus a recessed notch 283a was provided on a front edge portion of the rubber sheet 283 only around the antenna 156. At this time, a waterproofing property is ensured by attaching an edge portion of the notch 283a to be in close contact with a side surface of a shield covering the microcontroller 154. Although the silicone resin is applied around the rubber sheet 283, particularly on the right side, left side, and rear side, when it is difficult for the silicone resin to be applied to border an outer edge of the rubber sheet 283 without gaps, the resin is also applied on the rubber sheet 283 so that the resin adheres to an upper side of the outer edge portion 283b as illustrated in Fig. 20.

According to the examples illustrated in Figs. 18 to 20, since the resin layer was formed by covering almost all the circuit board 150 other than the wireless communication module 153 with silicone, waterproofing and dustproofing properties of the electronic elements mounted on the circuit board 150 could be significantly improved. Also, regarding the wireless communication module 153, particularly the antenna unit was not covered with the resin, and thereby a likelihood of deterioration in radiation performance of radio waves could be eliminated. Further, a material of the resin layer is not limited to silicone, and other resins having excellent workability, a waterproofing property, and a dustproofing property may also be used.

Fig. 21 is a partial enlarged view illustrating a configuration in which the frame body 281 is sealed by the upper case 110. A rib 116 extending in a battery cell direction is provided on a surface of the upper case 110 of the battery pack 100 facing the battery cells. The rib 116 has a contact surface that comes into contact with the frame body 281 and is configured so that the entire circumference of the contact surface is in contact with the frame body 281 in an assembled state of the battery pack 100. Thereby, in the assembled state of the battery pack 100, the circuit board 150, the frame body 281, the rib 116, and the upper case 110 can seal the communication module 153, and thereby a likelihood of deterioration in radiation performance of radio waves can be suppressed and waterproofing and dustproofing properties can be improved.

Although the present invention has been described above on the basis of examples, the present invention is not limited to the above-described examples, and various modifications can be made in a range not departing from the meaning of the present invention. For example, in the above-described example, Bluetooth (registered trademark) is mounted on the voltage variable battery pack, but the wireless communication device may be mounted not only on the voltage variable battery pack but also on the voltage-fixed battery pack using the present invention.

### [Reference Signs List]

1 Power tool main body
2 Housing
2a Body portion
2b Handle part
2c Battery pack mounting part
3 Motor
4 Trigger switch
5 Forward/reverse switch lever
8 Distal end tool holding part
9 Distal end tool
10 Battery pack mounting part
11a, 11b Rail groove
12 Curved part
14 Protruding part
20 Terminal part
20a Vertical surface
20b Horizontal surface
22 Positive electrode input terminal
27 Negative electrode input terminal
50 Terminal part
51 Base
51a, 51b Recessed part
52 Positive electrode input terminal
52c Wiring part
54c Wiring part
57 Negative electrode input terminal
59 Short circuit
59a, 59b Short-circuit terminal
60 Microcontroller
61 Power supply device
70 Load device
80 Terminal part
81 Base
82 Positive electrode input terminal
84 to 86 Signal terminal
87 Negative electrode input terminal
88 Signal terminal
100 Battery pack
101 Lower case
104 Slit
110 Upper case
111 Lower stage surface
111a Notch part
115 Upper stage surface
116 Rib part
121 to 128 Slot
131 Stopper part
132 Raised part
134 Slit
138a, 138b Rail
141 Latch
142 Locking part
146 Upper cell unit (first cell unit)
145a to 145e Battery cell
147 Lower cell unit (second cell unit)
147a to 147e Battery cell
150 Circuit board
150b Arrow
150c Recessed part
151a, 151b Mounting hole (of circuit board)
152 Mounting region (of wireless communication device)
153 Wireless communication module
154 Microcontroller
155 Wireless communication circuit
156 Antenna
157 Capacitor
158 LED
159a to 159d Through hole
160 Connection terminal group
161, 162 Upper positive electrode terminal
162a, 162b Arm part
164 T terminal
165 V terminal
166 LS terminal
167 Upper negative electrode terminal
167a, 167b Arm part
168 LD terminal
171, 172 Lower positive electrode terminal
172a, 172b Arm part
177 Lower negative electrode terminal
177a, 177b Arm part
180 Protection IC
182 Upper voltage detection circuit
183 Over-discharge signal
184 Overcharge signal
185 Power supply circuit
190 Protection IC
191 Over-discharge signal
192 Overcharge signal
193 Current detection circuit
194 Shunt resistor
195 Pad group
245 Separator
245c Protruding part
245e Abutting part
246 Space
247a Screw boss
250 Tab holder
261 Lead-out plate
261a Lead-out tab
261b Terminal surface
261c Horizontal surface part
261d Fuse part
261e Cutout part
262, 263, 264, 265 Connection plate
262a, 263a Tab
264a Connection terminal
266 Lead-out plate
266a Tab
271 Lead-out plate
271a Lead-out tab
271b Terminal surface
271c Side surface portion
271d Horizontal surface part
271e Fuse part
271f Cutout part
272 Connection plate
272a Connection terminal
276 Lead-out plate
276a Lead-out tab
278a, 278b Insulating sheet
281 Frame body
282 Rubber sheet
283 Rubber sheet
283a Notch
283b Outer edge portion
285a, 285b Both sides (of circuit board)
290 Switch
294b End portion (of lead wire)
296 to 299 Lead wire
296b, 297b, 298b, 299b End portion (of lead wire)
296 Lead wire
300 Support company
301 Terminal device
302 Display screen
350 Network
360 Base station
361 Telephone communication network

## Claims

1. A battery pack comprising:
a case which accommodates a plurality of battery cells;
a positive electrode terminal and a negative electrode terminal connected to the battery cells;
a wireless communication unit which performs wireless communication with an external device;
a wireless control circuit which controls the wireless communication unit; and
a circuit board on which the wireless communication unit is mounted, wherein
the wireless communication unit comprises the wireless communication circuit and an antenna wire extending along a surface of the circuit board from the wireless communication circuit,
an inhibiting part is provided around the wireless communication unit in a surface direction, and
a resin layer covering a soldered portion of mounted electronic elements is formed in a region of the circuit board other than the inhibiting part.

2. The battery pack according to claim 1, wherein the inhibiting part comprises a frame part covering a periphery of the wireless communication unit in the surface direction and a lid part covering the frame part, and accommodates the wireless communication circuit and the antenna wire inside the inhibiting part by positioning an opening surface of the frame part to be in contact with the circuit board.

3. The battery pack according to claim 1 or 2, wherein the inhibiting part has a higher transmittance to radio waves than the resin layer.

4. The battery pack according to any one of claims 1 to 3, wherein an upper surface of the frame part and a lower surface of the case come into contact with each other.

5. A battery pack comprising:
a case which accommodates a plurality of battery cells;
a positive electrode terminal and a negative electrode terminal connected to the battery cells;
a wireless communication unit which performs wireless communication with an external device;
a wireless control circuit which controls the wireless communication unit; and
a circuit board on which the wireless communication unit is mounted, wherein
the wireless communication unit comprises the wireless communication circuit and an antenna wire extending along a surface of the circuit board from the wireless communication circuit,
a rubber sheet member covering an upper surface of the wireless communication unit is provided, and
a resin layer covering a soldered portion of mounted electronic elements is formed in a region of the circuit board other than the rubber sheet member.

6. The battery pack according to claim 5, wherein the rubber sheet member comprises a notch formed to expose a portion of the antenna wire to outside.

7. The battery pack according to claim 5, wherein the resin layer is formed in an outer edge portion of the rubber sheet member at a part of an outer surface of a rubber sheet on a side opposite to the circuit board.

8. The battery pack according to any one of claims 1 to 7, wherein
a plurality of connection terminal groups comprising a positive electrode terminal and a negative electrode terminal is disposed to be aligned in a left-right direction on the circuit board, and
the wireless communication unit is mounted on a front side of the circuit board in a mounting direction with the connection terminal groups as a reference.

9. The battery pack according to claim 8, wherein the resin layer is formed by applying silicone, and the connection terminal groups except for leg parts are exposed from the resin layer to outside.

10. The battery pack according to claim 9, wherein
the wireless communication unit is configured to comprise the wireless communication circuit incorporated in a microcontroller and an antenna unit connected to the microcontroller, and
the antenna unit is disposed on a front side of the microcontroller when viewed in the mounting direction.

11. An electric device configured to operate a load device by the battery pack according to any one of claims 1 to 9, a mounting mechanism which allows the battery pack to be mounted and removed, and power from the battery pack.
